# EUROPEAN PATENT APPLICATION

(11) **EP 4 734 573 A1**
(43) Date of publication of application: **29.04.2026**
(21) Application number: 24824928.6
(22) Date of filing: 08.03.2024
(51) Int. Cl.: H04W 8/26

(54) **SWITCHING METHODS FOR DISTRIBUTED NODES, APPARATUS, AND STORAGE MEDIUM**

(30) Priority: 20.06.2023 CN 202310735836
(71) Applicant: Datang Mobile Communications Equipment Co., Ltd., Beijing 100085 (CN)
(72) Inventor: CAO, Caihong, Beijing 100085 (CN); LIU, Xianfeng, Beijing 100085 (CN)
(74) Representative: Studio Torta S.p.A.
(86) International application number: PCT/CN2024/080678
(87) International publication number: WO 2024/260026

(57) **Abstract**

The present disclosure provides a handover method and apparatus for a distributed node, and a storage medium. The handover method for the distributed node which is applied to a terminal includes: receiving a message carrying an ID of a target PDU session and a target IP address of the target PDU session; updating an IP address of the target PDU session using the target IP address, where the target PDU session is a PDU session that is affected during a handover procedure of a node serving the terminal. The present disclosure enables serving the terminal using a single target distributed node, which can reduce the delay and loss of the terminal in the signaling interaction and user plane data forwarding.

## Description

The present disclosure claims the priority to Chinese patent application No. 202310735836.5, titled "HANDOVER METHOD AND APPARATUS FOR DISTRIBUTED NODE, AND STORAGE MEDIUM" and filed with the China National Intellectual Property Administration on June 20, 2023, which is hereby incorporated by reference in its entirety.

### TECHNICAL FIELD

The present disclosure relates to the field of communications, and in particular to a handover method and apparatus for a distributed node, and a storage medium.

### BACKGROUND

A distributed network contains a plurality of distributed nodes, each of which has complete functions for controlling and data forwarding. Currently, in the distributed network, when a terminal moves from distributed node A to a service area of distributed node B, an anchor (a user plane function for receiving user data of the terminal) of a PDU (Protocol Data Unit, Protocol Data Unit) session of the terminal remains at the distributed node A. In this case, it is necessary to determine a target I-UPF (Intermediate-User Plane Function, Intermediate-User Plane Function) among a plurality of user plane functions corresponding to the distributed node B, to forward, through the target I-UPF, the data sent by the terminal to the anchor. In this solution, both the control plane signaling interaction and user plane data transmission of the PDU session of the terminal need to cross a plurality of distributed nodes (greater than or equal to 2), which increases the delay and loss in the signaling interaction and user plane data forwarding.

### SUMMARY

The present disclosure provides a handover method and apparatus for a distributed node, and a storage medium, which are used to reduce the delay and loss of terminals in signaling interaction and user plane data forwarding.

In a first aspect, the present disclosure provides a handover method for a distributed node, which is applied to a terminal, and the handover method for the distributed node: receiving a message carrying an ID of a target PDU session and a target IP address of the target PDU session; updating an IP address of the target PDU session using the target IP address, where the target PDU session is a PDU session that is affected during a handover procedure of a node serving the terminal.

In a second aspect, the present disclosure provides a handover method for a distributed node, which is applied to a source distributed node, and the handover method for the distributed node includes: receiving a handover request from a source radio access network; instructing a target distributed node to hand over to independently serve a terminal.

In a third aspect, the present disclosure provides a handover method for a distributed node, which is applied to a target distributed node, and the handover method for the distributed node includes: selecting a network function serving a terminal; creating a terminal context for the terminal; establishing a user plane path for a target PDU session of the terminal at the target distributed node.

In a fourth aspect, the present disclosure provides a handover apparatus for a distributed node, which is applied to a terminal, and the handover apparatus for the distributed node includes:
a receiving module, configured to receive a message carrying an ID of a target PDU session and a target IP address of the target PDU session; and
an updating module, configured to update an IP address of the target PDU session using the target IP address, where the target PDU session is a PDU session that is affected during a handover procedure of a node serving the terminal.

In a fifth aspect, the present disclosure provides a handover apparatus for a distributed node, which is applied to a source distributed node, and the handover apparatus for the distributed node includes:
a receiving module, configured to receive a handover request from a source radio access network; and
an instructing module, configured to instruct a target distributed node to hand over to independently serve a terminal.

In a sixth aspect, the present disclosure provides a handover apparatus for a distributed node, which is applied to a target distributed node, and the handover apparatus for the distributed node includes:
a selecting module, configured to select a network function serving a terminal;
a creating module, configured to create a terminal context for the terminal; and
an establishing module, configured to establish a user plane path for a target PDU session of the terminal at the target distributed node.

In a seventh aspect, the present disclosure provides a terminal, including a memory, a transceiver, and a processor:
the memory being configured to store a computer program;
the transceiver being configured to transmit and receive data under control of the processor; and
the processor being configured to read the computer program in the memory and perform the following operations:
   receiving a message carrying an ID of a target PDU session and a target IP address of the target PDU session;
   updating an IP address of the target PDU session using the target IP address, where the target PDU session is a PDU session that is affected during a handover procedure of a node serving the terminal.

In an eighth aspect, the present disclosure provides a source distributed node, including a memory, a transceiver, and a processor:
the memory being configured to store a computer program;
the transceiver being configured to transmit and receive data under control of the processor;
the processor being configured to read the computer program in the memory and perform the following operations:
   receiving a handover request from a source radio access network;
   instructing a target distributed node to hand over to independently serve a terminal.

In a ninth aspect, the present disclosure provides a target distributed node including a memory, a transceiver, and a processor:
the memory being configured to store a computer program;
the transceiver being configured to transmit and receive data under control of the processor;
the processor being configured to read the computer program in the memory and perform the following operations:
   selecting a network function serving a terminal;
   creating a terminal context for the terminal;
   establishing a user plane path for a target PDU session of the terminal at the target distributed node.

In a tenth aspect, the present disclosure provides a processor-readable storage medium, where the processor-readable storage medium stores a computer program, which is used to enable a processor to execute the handover method for the distributed node according to any one of the first to third aspects.

In an eleventh aspect, the present disclosure provides a computer program product containing instructions which, when executed on a computer, enable the computer to execute the handover method for the distributed node according to the first to third aspects.

According to the handover method and apparatus for the distributed node and the storage medium that are provided by the present disclosure, the handover method for the distributed node which is applied to the terminal: receiving the message carrying the ID of the target PDU session and the target IP address of the target PDU session; and updating the IP address of the target PDU session using the target IP address, where the target PDU session is a PDU session that is affected during the handover procedure of the node serving the terminal. By receiving the target IP address of the affected PDU session and updating the original IP address of the target PDU session through the target IP address, the present disclosure can enable the target distributed node to provide subsequent services for the terminal, which can reduce the delay and loss of the terminal in signaling interaction and user plane data forwarding.

It should be understood that what is described in the SUMMARY section above is not intended to limit key or important features of embodiments of the present disclosure, nor is it intended to limit the scope of the present disclosure. Other features of the present disclosure will be easily understood through the following description.

### BRIEF DESCRIPTION OF DRAWINGS

In order to describe the technical solutions in the present disclosure or in the prior art more clearly, drawings that need to be used in the description of embodiments or prior art will be introduced briefly in the following. Obviously, the drawings described below are some embodiments of the present disclosure, and for those of ordinary skill in the art, other drawings can be obtained based on these drawings without paying creative efforts.
FIG. 1 is a schematic diagram of a service architecture provided in the prior art.
FIG. 2 is a schematic diagram of a preparation phase of a handover procedure provided in the prior art.
FIG. 3 is a schematic diagram of an execution phase of a handover procedure provided in the prior art.
FIG. 4 is a schematic diagram of a registration procedure provided in the prior art.
FIG. 5 is a schematic diagram of a cross-domain mobility handover management method provided in the prior art.
FIG. 6 is a schematic diagram of a preparation phase of a cross-domain mobility handover management method provided in the prior art.
FIG. 7 is a schematic diagram of an execution phase of a cross-domain mobility handover management method provided in the prior art.
FIG. 8 is a schematic diagram where a target distributed node is adopted to independently serve a terminal according to an embodiment of the present disclosure.
FIG. 9 is a schematic diagram of a preparation phase of a handover method for a distributed node according to an embodiment of the present disclosure.
FIG. 10 is a schematic diagram of an execution phase of a handover method for a distributed node according to an embodiment of the present disclosure.
FIG. 11 is a schematic diagram of a registration procedure according to an embodiment of the present disclosure.
FIG. 12 is a schematic diagram of an execution phase of another handover method for a distributed node according to an embodiment of the present disclosure.
FIG. 13 is a schematic diagram of an execution phase of still another handover method for a distributed node according to an embodiment of the present disclosure.
FIG. 14 is a structural block diagram of a first target handover apparatus for a distributed node according to an embodiment of the present disclosure.
FIG. 15 is a structural block diagram of a second handover apparatus for a distributed node according to an embodiment of the present disclosure.
FIG. 16 is a structural block diagram of a third handover apparatus for a distributed node according to an embodiment of the present disclosure.
FIG. 17 is a structural block diagram of a fourth handover apparatus for a distributed node according to an embodiment of the present disclosure.
FIG. 18 is a structural block diagram of a fourth handover apparatus for a distributed node according to an embodiment of the present disclosure.
FIG. 19 is a structural block diagram of a fifth handover apparatus for a distributed node according to an embodiment of the present disclosure.

### DESCRIPTION OF EMBODIMENTS

In the present disclosure, the term "at least one" means one or more, and the term "a plurality of" means two or more. The term "and/or" describes an association relationship of associated objects, which means that there can be three kinds of relationships, for example, A and/or B can mean: a case where A exists alone, a case where both A and B exist, and a case where B exists alone, where A and B may be singular or plural. The character "/" generally indicates that the associated objects before and after the character are in an "or" relationship. The expression "at least one (item) of the following" or similar phrasing refers to any combination of these items, including any single item or any combination of plural items. For example, "at least one (item) of a, b, or c" may represent: a, b, c, a-b, a-c, b-c, or a-b-c; where a, b, and c may be either single or multiple.

It can be understood that the various steps or operations in the embodiments of the present disclosure are merely examples, and the embodiments of the present disclosure may also perform other operations or variations of various operations. Furthermore, the various steps may be executed in a different order than that presented in the embodiments of the present disclosure, and it may not be necessary to execute all operations in the embodiments of the present disclosure.

The technical solutions in the embodiments of the present disclosure will be described below clearly and completely in conjunction with the accompanying drawings in the embodiments of the present disclosure. Obviously, the described embodiments are merely part of the embodiments of the present disclosure, rather than all of the embodiments. Based on the embodiments in the present disclosure, all other embodiments obtained by those of ordinary skill in the art without creative work shall fall within the protection scope of the present disclosure.

The technical solutions according to the embodiments of the present disclosure can be applied to a variety of systems, especially 6G systems. For example, applicable systems may include a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile system (universal mobile telecommunication system, UMTS), a worldwide interoperability for microwave access (worldwide interoperability for microwave access, WiMAX) system, a 6G New Radio (New Radio, NR) system, etc. All these various systems include terminals and network devices. The system may also include a core network part, such as an evolved packet system (Evloved Packet System, EPS), a 6G System (6GS), and so on.

In order to better understand the present solutions, the prior art of the present solutions and the problems existing in the prior art are first described as follows, respectively.

### 1. Explanation of relevant abbreviations

UPF (User Plane Function, User Plane Function), AMF (Access and Mobility Management Function, Access and Mobility Management Function), SMF (Session management function, Session management function), PCF (Policy Control Function, Policy Control Function), AF (Application Function, Application Function), NSSF (Network slice selection function, Network slice function), AUSF (Authentication server function, Authentication server function), UDM (Unified Data Management, Unified Data Management), NSACF (Network Slice Admission Control Function, Network Slice Admission Control Function), NSSAAF (Network Slice-Specific Authentication and Authorization Function, Network Slice-Selected Authentication and Authorization Function) and DN (Data Network, Data Network). In addition, N1, N2, and N4 are all communication interfaces of corresponding network elements.

### 2. 6G Architecture

The 6G architecture will be a new type of network architecture where mobile communication networks with centralized control and open Internet are integrated with each other, featuring the coexistence of centralization and distribution. There is a need to go beyond centralized control and gradually evolve to a distributed architecture, extending more networks to the network edge, and establishing distributed homogeneous micro-cloud units with different functional levels. Each micro-cloud unit is self-contained and has all the complete functions for controlling and data forwarding.

Here, a distributed network node is a micro-cloud unit deployed at the network edge or an edge network itself.

### 3. Distributed Network Service Mode

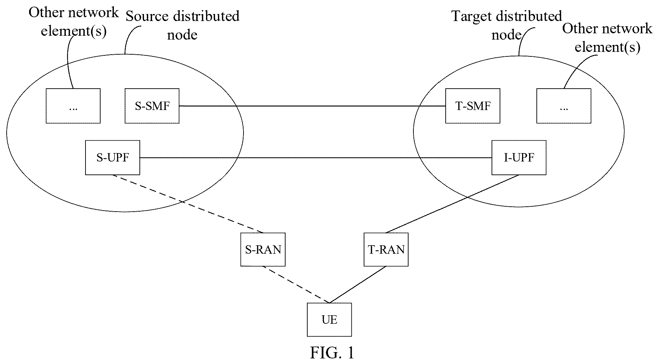

Referring to FIG. 1, FIG. 1 is a distributed network service mode, including a terminal UE, a source radio access network (S-RAN), a source distributed node, a target radio access network (T-RAN), and a target distributed node. The source distributed node includes: a source session management function (S-SMF), a source user plane function (S-UPF), and other network elements. The target distributed node includes: a target session management function (T-SMF), an intermediate user plane function (I-UPF), and other network elements. Based on FIG. 1, in a distributed network scenario, when the UE moves from the source distributed node to a service area of the target distributed node, the source distributed node and the target distributed node need to collaborate to serve the UE. Specifically, the anchor (S-UPF) of the PDU (Protocol Data Unit, Protocol Data Unit) session remains at the source distributed node, and an I-UPF needs to be inserted at the target distributed node to forward control plane signaling of the PDU session of the UE to the source distributed node. In this case, the control plane signaling interaction and user plane data transmission of the PDU session need to cross a plurality of distributed nodes, resulting in increased delay and loss in signaling interaction and user plane data forwarding. The more the distributed nodes crossed, the more pronounced this drawback becomes.

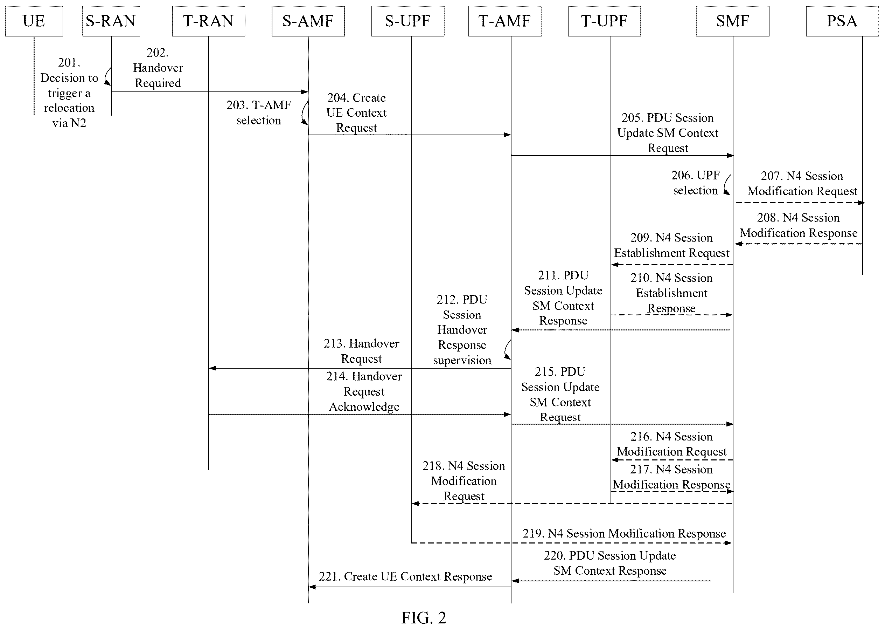

4. 3GPP TS 23.502 4.9.1.3 provides an N2 (an interface) handover procedure, including a preparation phase and an execution phase. The preparation phase of the handover procedure, with reference to FIG. 2, includes steps as follows.
201. Decision to trigger a relocation via N2.
202. Handover Request.
203. T-AMF selection.
204. Create UE Context Request.
205. PDU Session Update SM Context Request.
206. UPF selection.
207. N4 Session Modification Request.
208. N4 Session Modification Response.
209. N4 Session Establishment Request.
210. N4 Session Establishment Response.
211. PDU Session Update SM Context Response.
212. PDU Session Handover Response supervision.
213. Handover Request.
214. Handover Request Acknowledge.
215. PDU Session Update SM Context Request.
216. N4 Session Modification Request.
217. N4 Session Modification Response.
218. N4 Session Modification Request.
219. N4 Session Modification Response.
220. PDU Session Update SM Context Response.
221. Create UE Context Response.

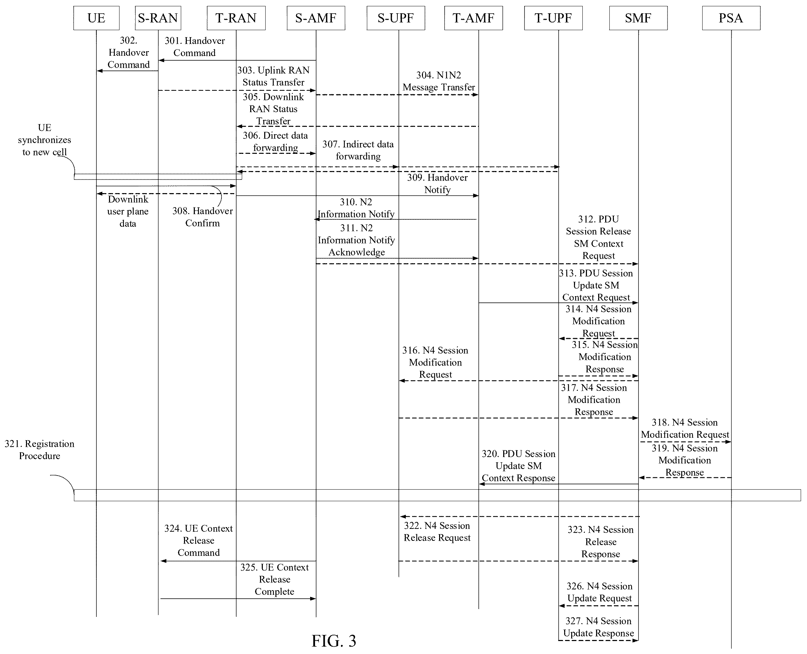

The execution phase in the handover procedure, with reference to FIG. 3, includes steps as follows.
301. Handover Command.
302. Handover Command.
303. Uplink RAN Status Transfer.
304. N1N2 Message Transfer.
305. Downlink RAN Status Transfer.
306. Direct data forwarding.
307. Indirect data forwarding.
308. Handover Confirm.
309. Handover Notify.
310. N2 Information Notify.
311. N2 Information Notify Acknowledge.
312. PDU Session Release SM Context Request.
313. PDU Session Update SM Context Request.
314. N4 Session Modification Request.
315. N4 Session Modification Response.
316. N4 Session Modification Request.
317. N4 Session Modification Response.
318. N4 Session Modification Request.
319. N4 Session Modification Response.
320. PDU Session Update SM Context Response.
321. Registration Procedure.
322. N4 Session Release Request.
323. N4 Session Release Response.
324. UE Context Release Command.
325. UE Context Release Complete.
326. N4 Session Update Request.
327. N4 Session Update Response.

### 5. Registration procedure provided by 3GPP TS23.502 4.2.2 (including mobility registration update procedure)

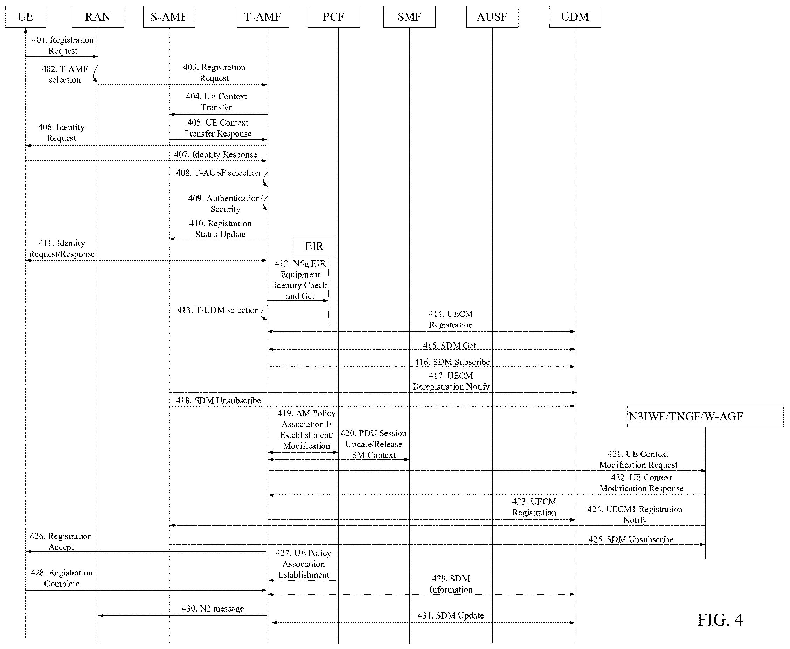

In this registration procedure, the T-AMF (Target Access and Mobility Management Function) is aware that this is a handover procedure and only executes a subset of the registration procedure in the 3GPP protocol, especially skipping steps 4, 5 and 10 regarding the context handover between S-AMF (Source Access and Mobility Management Function) and T-AMF in the registration procedure. Referring to FIG. 4, the registration procedure specifically include steps as follows.
401. Registration Request.
402. T-AMF selection.
403. Registration Request.
404. UE Context Transfer.
405. UE Context Transfer Response.
406. Identity Request.
407. Identity Response.
408. T-AUSF selection.
409. Authentication/Security.
410. Registration Status Update.
411. Identity Request/Response.
412. N5g EIR Equipment Identity Check and Get.
413. T-UDM selection.
414. UECM Registration.
415. SDM Get.
416. SDM Subscribe.
417. UECM Deregistration Notify.
418. SDM Unsubscribe.
419. AM Policy Association E Establishment/Modification.
420. PDU Session Update SM Context.
421. UE Context Modification Request.
422. UE Context Modification Response.
423. UECM Registration.
424. UECM1 Registration Notify.
425. SDM Unsubscribe.
426. Registration Accept.
427. UE Policy Association Establishment.
428. Registration Complete.
429. SDM Information.
430. N2 message.
431. SDM Update.

### 6. "A Cross-Domain Mobility Handover Management Method"

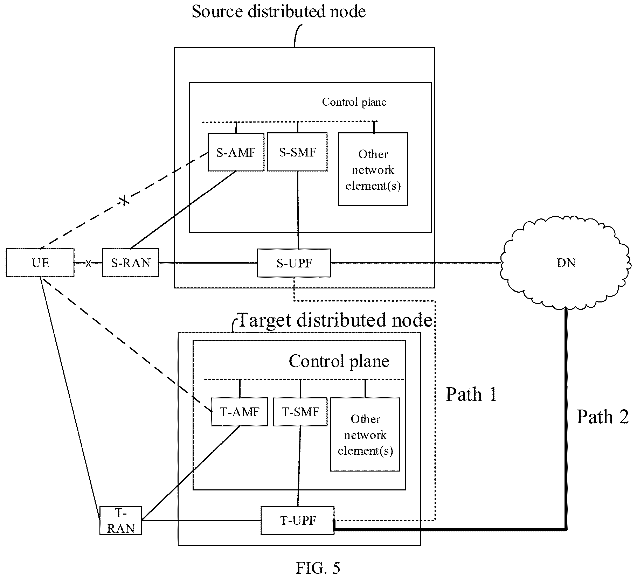

As shown in FIG. 5, a terminal moves and hands over from the source distributed node to the target distributed node. There may be more than one user plane function (UPF) in FIG. 5 and subsequent descriptions. The mobility and handover across distributed nodes involve three parts: the core network control plane, the core network user plane, and the radio access network (RAN).

### 1) For the core network control plane

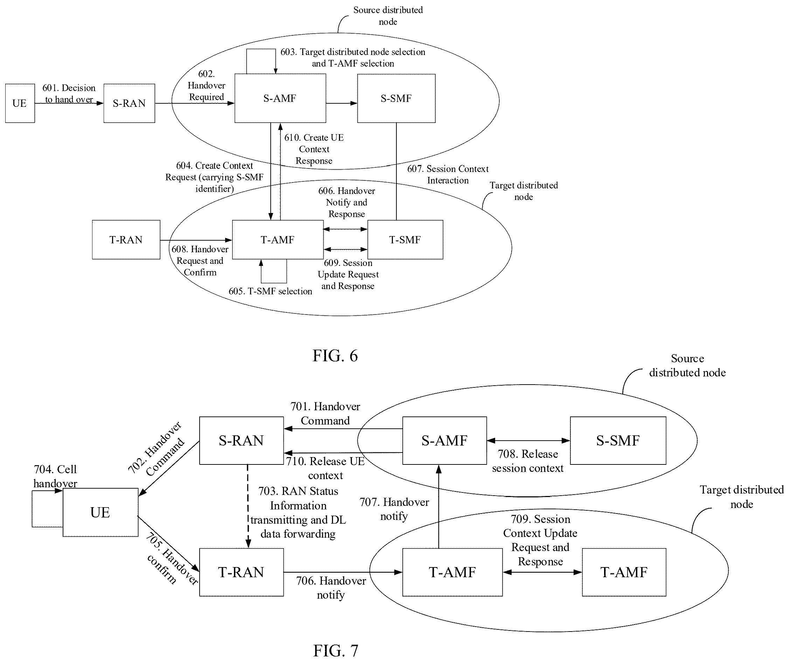

First, when the movement and handover of the UE occur across distributed nodes, the control plane of the target distributed node performs context management and related control, as shown in the preparation phase of FIG. 6 and the execution phase of FIG. 7.

With reference to FIG. 6, the preparation phase includes steps as follows.
601. Decision to hand over.
602. Handover Required.
603. Target distributed node selection and T-AMF selection.
604. Create Context Request (carrying S-SMF identifier).
605. T-SMF selection.
606. Handover Notify and Response.
607. Session Context Interaction.
608. Handover Request and Confirm.
609. Session Update Request and Response.
610. Create UE Context Response.

With reference to FIG. 7, the execution phase includes steps as follows.
701. Handover Command.
702. Handover Command.
703. RAN Status Information transmitting and DL data forwarding.
704. Cell handover.
705. Handover confirm.
706. Handover notify.
707. Handover notify.
708. Release session context.
709. Session Context Update Request and Response.
710. Release UE context.

In summary, for the selection of network function(s) in the control plane of the target distributed node, such as the selection of T-AMF, the selection of the target distributed node needs to be completed first. The selection of the target distributed node is completed by the S-AMF of the source distributed node locally or through calling a new network function (such as a node selection function) based on an identifier of the T-RAN, node service information, the UE context, etc. The selection of T-AMF and the interaction between the S-AMF and the T-AMF may be that: the S-AMF completes the selection of the T-AMF locally and performs the interaction; or the S-AMF first sends a message to a default AMF of the target distributed node, and the default AMF then performs the selection of T-AMF; or the S-AMF, the default AMF of the source distributed node, the default AMF of the target distributed node, then the default AMF of the target distributed node performs the selection of T-AMF. The interaction of network functions between distributed nodes may be direct interaction, or indirect interaction through centralized node(s). For example, the information interaction between the S-AMF and the T-AMF may be direct information interaction, or indirect interaction through centralized node(s). After receiving the Create Context Request, the T-AMF performs T-SMF selection, where how to select the T-SMF is not within the discussion scope of the present disclosure. The T-AMF requests the T-SMF to create a session context, and the request carries information about the S-session management function. The S-SMF performs T-UPF selection, and interacts with the selected T-UPF on the establishment or modification of session related information and user plane path(s), which may include the establishment of inter-domain forwarding path(s). After the handover is completed, the T-SMF interacts with the S-SMF on the release of the session context maintained at the S-SMF, including the user plane path(s) related to the S-SMF and the S-UPF.

### 2) For the core network user plane

As shown in FIG. 5, cross-domain mobility management involves the user plane path(s). Ultimately, the posthandover user plane path may be Path 1, where the terminal first accesses the T-UPF of the target distributed node via the T-RAN, and then data forwarding and access to the DN (Data Network, Data Network) are performed via the S-UPF of the source distributed node. Or, it may be the mode of Path 2, where the terminal directly accesses the DN via the T-UPF of the target distributed node. Path 1, such a cross-domain user plane path, involves the aforementioned inter-domain forwarding path. In the handover procedure, for downlink data forwarding, it is performed directly using Path 2 if there is a connection between the S-RAN and T-RAN (for example, an IP connection), or performed indirectly using the user plane connection (Path 1) between distributed nodes if there is no connection between the S-RAN and the T-RAN.

### 3) For RAN

In FIG. 5, the S-RAN and the T-RAN before and after the handover may be different devices without an Xn interface therebetween (where the interface between two base stations in 5G is an Xn interface, which may have a different name in 6G), or they may be different devices with an Xn interface therebetween, or they may be the same device with changed cells.

The above-mentioned FIGS. 1 to 7 are all solutions adopted in the prior art.

### 7. Analysis of Technical Problems

Based on the prior art mentioned above, there are technical problems including: 1) the PDU session of the UE needs to be collaboratively served by a plurality of distributed nodes, thereby increasing the load of network functions and the complexity of cross-node interactions; 2) the delay and loss of control plane signaling interaction and user plane data transmission across a plurality of distributed nodes are increased.

Specifically, in a distributed network, when a UE registers with the network, it is at the granularity of a distributed node. That is, the UE registers with a certain distributed node, and the range of the registration area of the UE is part or all of the service area of the distributed node. When the UE moves out of the service range of the distributed node, a mobility registration update procedure may be executed, and the network element of the target distributed network node currently serving the UE serves the UE. However, in order to ensure session continuity, in the prior art, the PSA (anchor UPF) remains unchanged during handover, which requires the SMFs and the UPFs of a plurality of distributed nodes to serve the UE.

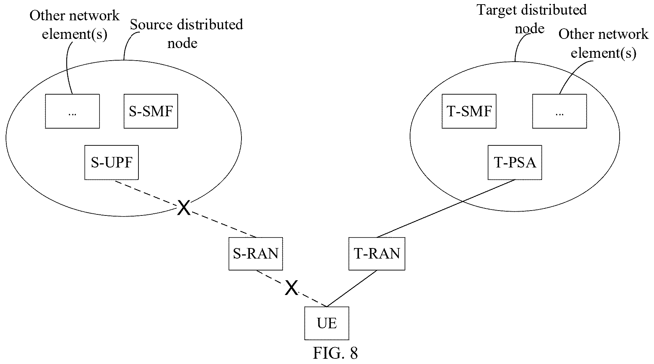

For the inventive concept of the present disclosure, reference is made to FIG. 8, which is a handover method for a distributed node according to the present disclosure. After adopting this method, a single target distributed node can be directly adopted to serve a UE. According to the handover method for the distributed node provided by the present disclosure, when a UE moves to a service area of a target distributed node, if the target distributed node can meet PDU session requirements of the UE, a T-PSA (target anchor user plane function) is reselected for a PDU session in the target distributed node, or a PDU session is re-established for the UE and a PDU session of a source distributed node is released, to ensure that the UE is served by a single distributed node (the target distributed node) after moving to the service area of the target distributed node, that is, the handover at the granularity of a distributed node is completed.

The following are specific embodiments of the handover method for the distributed node provided by the present disclosure, where the handover method for the distributed node provided by the present disclosure is executed when a terminal (UE) moves from a service area of a source distributed node to a service area of a target distributed node. The present disclosure relates to the interaction between a terminal (UE), a source radio access network (S-RAN), a target radio access network (T-RAN), a source distributed node, and a target distributed node. The source distributed node and the S-RAN provide services to the terminal before movement, and the target distributed node and the T-RAN provide services to the terminal after movement. In addition, the source distributed node includes: a source access and mobility management function (S-AMF), a source session management function (S-SMF), a source user plane function (S-UPF), and a source anchor user plane function (S-PSA). The target distributed node includes: a target access and mobility management function (T-AMF), a target session management function (T-SMF), a target user plane function (T-UPF), and a target anchor user plane function (T-PSA).

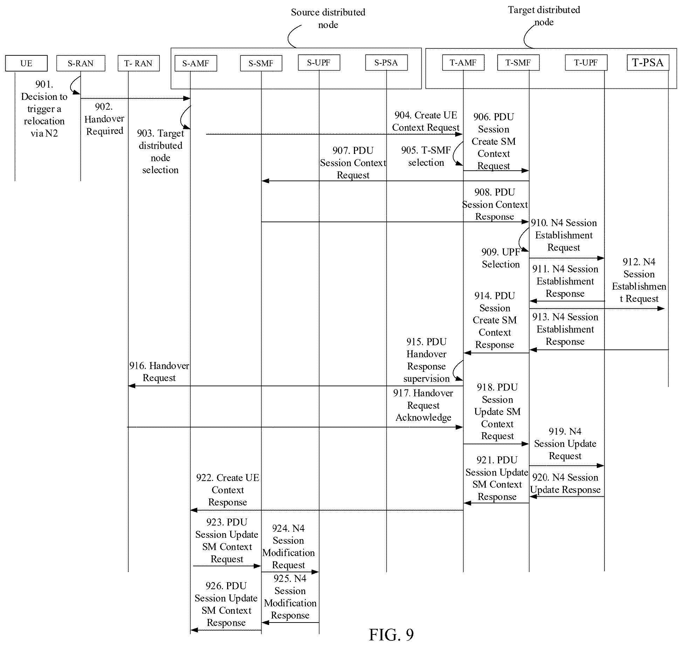

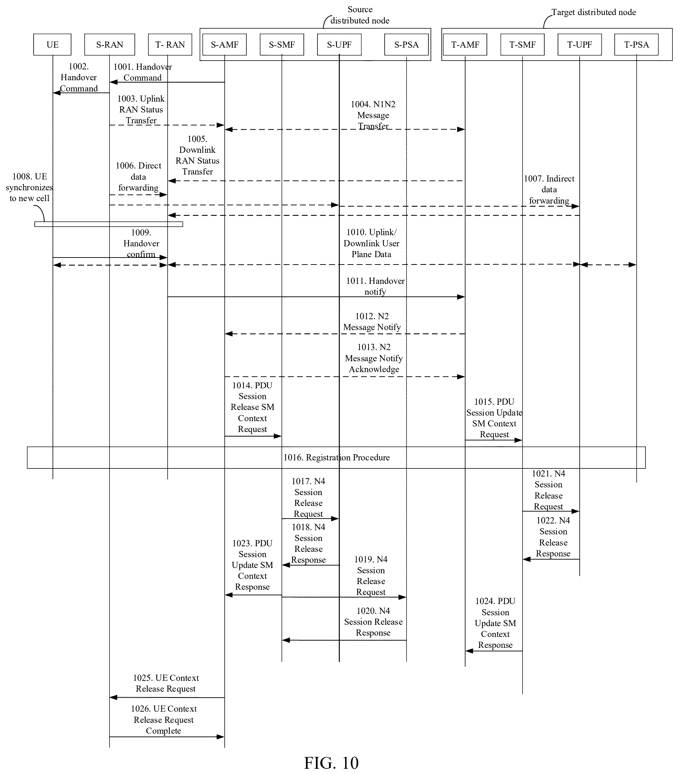

In Embodiment 1, in a preparation phase of N2 (an interface from an RAN to an AMF) handover, the T-SMF of the target distributed node reselects the T-PSA for the relevant PDU session and re-establishes the user plane path for the UE at the target distributed node, which specifically includes a preparation phase shown in FIG. 9 and an execution phase shown in FIG. 10. Referring to FIG. 9, the preparation phase includes steps as follows.
901. Decision to trigger a relocation via N2.
902. Handover Required.

The S-RAN sends a Handover Required to the S-AMF, and the Handover Required includes: all PDU session information processed by the S-RAN, and indication information of whether a direct forwarding path from the S-RAN to the T-RAN is available.

903. Target distributed node selection.

The S-AMF may determine the target distributed node based on a current location of the terminal and relevant information of the UE, and the target service distributed node provides services to the terminal.

904. Create UE Context Request.

Then, the S-AMF sends the Create UE Context Request to the T-AMF of the selected target distributed node.

905. T-SMF selection.

The T-AMF selects a T-SMF serving the UE based on the received Create UE Context Request. Specifically, the T-AMF selects the T-SMF from various SMFs based on the location of the UE and a service range of each SMF in the target distributed node.

906. PDU Session Create SM Context Request.

After selecting the T-SMF, the T-AMF sends the PDU Session Create SM (session management) Context Request to the selected T-SMF.

907. PDU Session Context Request.

After receiving the PDU Session Create SM Context Request, the T-SMF sends the PDU Session Context Request to the S-SMF, and this Request is used to request a context of a PDU session of the UE.

908. PDU Session Context Response.

After receiving the PDU Session Context Request, the S-SMF sends the PDU Session Context Response to the T-SMF, and this PDU Session Context Response carries the context of the PDU session of the UE. In this way, the T-SMF obtains the context of the PDU session of the UE.

909. UPF Selection.

After receiving the context of the PDU session of the UE, the T-SMF selects a T-UPF that can provide services for the UE and reselects an anchor UPF (T-PSA) in the target distributed node. The T-PSA is the anchor UPF that is selected in the target distributed node to serve the UE.

In steps 906 to 909, the T-SMF obtains the context of the PDU session of the UE from the S-SMF and reselects the T-PSA for the PDU session. If an IP of the UE is dynamically allocated, the T-SMF re-allocates an IP address or an IP address prefix for the PDU session; if the UE subscribes to a static IP address or prefix, there is no need to re-allocate the IP address or the IP address prefix for the PDU session, and the PDU session adopts the previous IP address.

910. N4 Session Establishment Request.

After selecting the T-UPF, the T-SMF sends the N4 (a communication interface between SMF and UPF) Session Establishment Request to the T-UPF.

911. N4 Session Establishment Response.

After receiving the N4 Session Establishment Request, the T-UPF sends the N4 Session Establishment Response to the T-SMF.

912. N4 Session Establishment Request.

After selecting the T-PSA, the T-SMF sends the N4 Session Establishment Request to the T-PSA.

913. N4 Session Establishment Response.

After receiving the N4 Session Establishment Request, the T-PSA sends the N4 Session Establishment Response to the T-SMF.

In steps 910 to 913, the T-SMF issues a FAR (packet forwarding rule) and PDR (data packet detection rule) to the T-UPF/T-PSA through the N4 Session Establishment Request based on a UE IP of a target PDU session to establish a new user plane path for the PDU session. If an indirect forwarding tunnel is used from the S-RAN to the T-RAN, the T-SMF simultaneously issues a PDR and a FAR of the original IP of the PDU session to the T-UPF. In this case, the T-UPF needs to allocate three TE IDs (i.e., tunnel endpoint identifiers of the S-RAN, the T-RAN, and the T-UPF).

914. PDU Session Create SM Context Response.

After the T-SMF completes steps 907 to 913, the PDU Session Create SM Context is completed, and the T-SMF sends the PDU Session Create SM Context Response to the T-AMF.

915. PDU Handover Response supervision.

The PDU Handover Response supervision of the T-AMF is used to supervise whether the PDU Session Create SM Context Response sent by the T-SMF is received.

916. Handover Request.

If the T-AMF receives the PDU Session Create SM Context Response sent by the T-SMF, the T-AMF sends the Handover Request to the T-RAN.

917. Handover Request Acknowledge.

After receiving the Handover Request, the T-RAN sends the Handover Request Acknowledge to the T-AMF.

918. PDU Session Update SM Context Request.

The T-AMF sends the PDU Session Update SM Context Request to the T-SMF.

919. N4 Session Update Request.

The T-SMF sends the N4 Session Update Request to the T-UPF, and the N4 Session Update Request carries tunnel information of the T-RAN to establish a downlink forwarding tunnel from the T-UPF to the T-RAN.

920. N4 Session Update Response.

The T-UPF sends the N4 Session Update Response to the T-SMF.

921. PDU Session Update SM Context Response.

The T-SMF sends the PDU Session Update SM Context Response to the T-AMF.

922. Create UE Context Response.

After steps 906 to 921 are completed, the T-AMF sends the Create UE Context Response to the S-AMF in response to the Create UE Context Request in step 904.

Specifically, the Create UE Context Response sent by the T-AMF to the S-AMF carries an IP address newly allocated by the T-SMF for the PDU session and an ID of the PDU session.

Further, if the indirect forwarding tunnel is used from the S-RAN to the T-RAN, steps 923 to 926 are executed; otherwise, there is no need to execute steps 923 to 926.

923. PDU Session Update SM Context Request.

The S-AMF sends the PDU Session Update SM Context Request to the S-SMF.

924. N4 Session Modification Request.

The S-SMF sends the N4 Session Modification Request to the S-UPF, and the N4 Session Modification Request carries tunnel information of the T-UPF to establish a forwarding tunnel from the S-UPF to the T-UPF.

925. N4 Session Modification Response.

The S-UPF sends theN4 Session Modification Response to the S-SMF.

926. PDU Session Update SM Context Response.

The S-SMF sends the PDU Session Update SM Context Response to the S-AMF.

With reference to FIG. 10, the execution phase specifically includes steps as follows.

1001. Handover Command.

The S-AMF sends the Handover Command message to the S-RAN. If the T-SMF newly allocates the IP address for the PDU session, the Handover Command carries the IP address newly allocated by the T-SMF for the PDU session and the ID of the PDU session.

1002. Handover Command.

The S-RAN sends the Handover Command message to the UE, and this Handover Command message includes the IP address newly allocated by the T-SMF for the PDU session and the ID of the PDU session. The UE determines a corresponding PDU session according to the ID of the PDU session, and then uses the newly allocated IP address to update an IP address of the PDU session stored in the UE.

1003. Uplink RAN Status Transfer.

Simultaneously, the S-RAN performs the Uplink RAN Status Transfer to the S-AMF.

1004. N1N2 Message Transfer.

The S-AMF sends the N1N2 Message Transfer message to the T-AMF.

1005. Downlink RAN Status Transfer.

The T-AMF may perform the Downlink RAN Status Transfer message to the T-RAN.

1006. Direct data forwarding.

If a direct forwarding path from the S-RAN to the T-RAN is available, the S-RAN performs data forwarding to the T-RAN in a direct forwarding manner.

1007. Indirect data forwarding.

If the direct forwarding path from the S-RAN to the T-RAN is unavailable, data forwarding is performed via an indirect data path from the S-RAN to the S-UPF, then to the T-UPF, and further to the T-RAN.

1008. UE synchronizes to new cell.

In addition, the new cell refers to a cell served by the target distributed node.

1009. Handover confirm.

After the UE sends the Handover Confirm message to the T-RAN, a user plane path from the UE to the T-RAN and then to the target distributed node has been activated. Afterwards, user data is forwarded on the new user plane path, and the forwarding uses the new IP allocated by the T-SMF for the PDU session.

1010. Uplink/Downlink User Plane Data.

After the user plane path from the UE to the T-RAN and then to the target distributed node (the UE to the T-RAN, then to the T-UPF, and further to the T-PSA) has been activated, the transmission of the Uplink User Plane Data and the Downlink User Plane Data may be achieved through the user plane path (the UE to the T-RAN, then to the T-UPF, and further to the T-PSA).

1011. Handover notify.

The T-RAN sends the Handover notify to the T-AMF.

1012. N2 Message Notify.

The T-AMF sends the N2 Information Notify to the S-AMF.

1013. N2 Message Notify Acknowledge.

The S-AMF sends the N2 Information Notify Acknowledge to the T-AMF.

1014. PDU Session Release SM Context Request.

The S-AMF sends the PDU Session Release SM Context Request to the S-SMF, to enable the S-SMF to release the PDU session of the UE.

1015. PDU Session Update SM Context Request.

The T-AMF sends the PDU Session Update SM Context Request to the T-SMF, and the PDU Session Update SM Context Request includes a value of a timer started in the S-AMF, to enable the T-SMF to start the timer based on the value of the timer, so as to release a resource of an indirect forwarding tunnel for the original IP of the PDU session in the T-UPF.

1016. Registration Procedure.

For the registration procedure, reference is made to the above FIG. 5, which will not be repeated here.

1017. N4 Session Release Request.

The S-SMF sends the N4 Session Release Request to the S-UPF.

1018. N4 Session Release Response.

After the S-UPF deletes information of the target PDU session thereon, the S-UPF sends the N4 Session Release Response to the S-SMF.

1019. N4 Session Release Request.

The S-SMF sends the N4 Session Release Request to the S-PSA.

1020. N4 Session Release Response.

After the S-PSA deletes information of the target PDU session thereon, the S-PSA sends the N4 Session Release Response to the S-SMF.

1021. N4 Session Release Request.

The T-SMF sends the N4 Session Release Request to the T-UPF.

1022. N4 Session Release Response.

After the T-UPF deletes relevant information about the first IP address of the PDU session thereon, the T-UPF returns the N4 Session Release Response to the T-SMF.

1023. PDU Session Update SM Context Response.

The S-SMF sends the Update SM Context Response to the S-AMF.

In steps 1017 to 1022, after the timer expires, the S-SMF releases the user plane path, the indirect forwarding tunnel, and the relevant SM context of the relevant PDU session of the source distributed node, and the T-SMF releases the resource of the indirect forwarding tunnel in the T-UPF for the target PDU session of the source distributed node. In the embodiment of the present disclosure, the target PDU session refers to a PDU session that is affected during the handover procedure.

1024. PDU Session Update SM Context Response.

The T-SMF sends the PDU Session Update SM Context Response to the T-AMF in response to the PDU Session Update SM Context Request in step 1015.

1025. UE Context Release Command.

The S-AMF sends the UE Context Release Command to the S-RAN, to instruct the S-RAN to release the UE context.

1026. UE Context Release Request Complete.

After the S-RAN releases the UE context, the S-RAN sends the UE Context Release Request Complete to the S-AMF.

In an embodiment of the present disclosure, after the timer expires, the release procedure of steps 1007 to 1026 may be executed, to enable the S-SMF to release the user plane path, the indirect forwarding tunnel, and the relevant SM context of the relevant PDU session of the source distributed node, and the T-SMF releases the resource of the indirect forwarding tunnel in the T-UPF.

Afterwards, the uplink and downlink data of the user are all forwarded based on the user plane path of T-RAN-T-UPF-T-PSA, enabling serving the UE by a single distributed node.

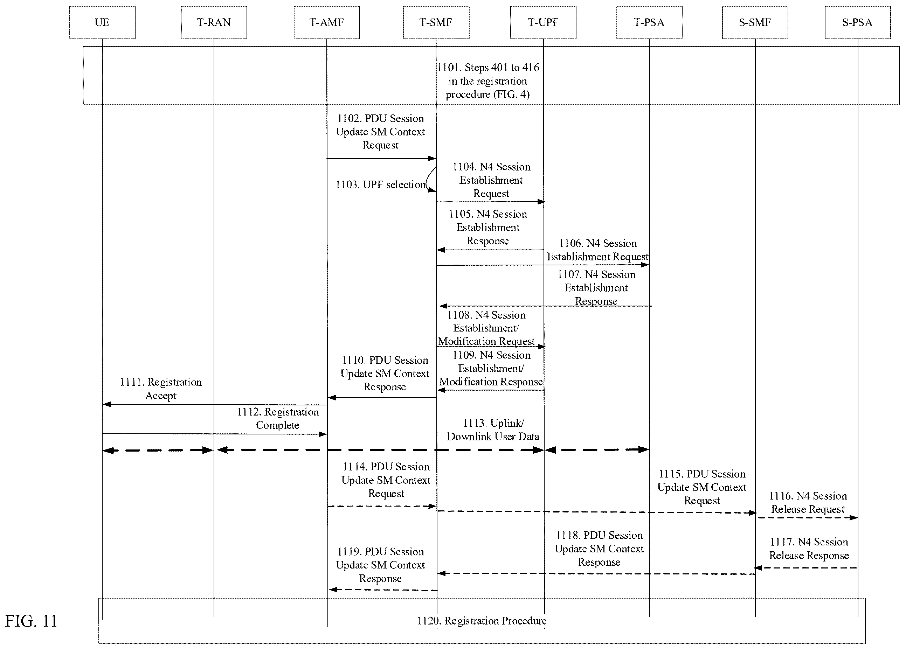

Embodiment 2 includes: handover according to the method of "A Cross-Domain Mobility Handover Management Method" (referring to FIG. 6 and FIG. 7). That is, an indirect forwarding tunnel is established (if necessary) through the preparation phase in FIG. 6 and the execution phase in FIG. 7. In the "Mobility Registration Update" procedure (referring to FIG. 4), the behavior of the T-SMF reselecting the T-PSA is performed and a path from the T-RAN to the T-PSA is established. Since the T-SMF has been selected in the preparation phase and the execution phase, the relevant step (step 402 in FIG. 4) of the mobility registration update procedure can be omitted. Referring to FIG. 11, steps as follows are specifically included.

1101. Steps 401 to 416 in the registration procedure (FIG. 4).

This step includes steps 401 to 416 in FIG. 4.

1102. PDU Session Update SM Context Request.

The T-AMF sends the PDU Session Update SM Context Request to the T-SMF.

1103. UPF selection.

After receiving the context of the PDU session of the UE, the T-SMF selects a T-UPF that can provide services for the UE and reselects an anchor UPF (T-PSA) in the target distributed node, where the T-PSA is the anchor UPF that serves the UE in the target distributed node.

1104. N4 Session Establishment Request.

After selecting the T-UPF, the T-SMF sends the N4 (a communication interface between SMF and UPF) Session Establishment Request to the T-UPF.

1105. N4 Session Establishment Response.

After receiving the N4 Session Establishment Request, the T-UPF sends the N4 Session Establishment Response to the T-SMF.

1106. N4 Session Establishment Request.

After selecting the T-PSA, the T-SMF sends the N4 Session Establishment Request to the T-PSA.

1107. N4 Session Establishment Response.

After receiving the N4 Session Establishment Request, the T-PSA sends the N4 Session Establishment Response to the T-SMF.

For steps 1104 to 1107, reference may be made to steps 910 to 913 accordingly.

1108. N4 Session Establishment/Modification Request.

The T-SMF sends the N4 Session Establishment/Modification Request to the T-UPF.

1109. N4 Session Establishment/Modification Response.

The T-UPF sends the N4 Session Establishment/Modification Response to the T-SMF. In step 1103, if the selected T-UPF is the same as the T-UPF during the establishment of the indirect forwarding path, steps 1104 and 1105 do not need to be performed.

1110. PDU Session Update SM Context Response.

The T-SMF sends the PDU Session Update SM Context Response to the T-AMF in response to the PDU Session Update SM Context Request in step 1102.

1111. Registration Accept.

The T-AMF sends the Registration Accept to the UE. Specifically, the tunnel information of the T-UPF is sent to the T-RAN along with the Registration Accept message. Also, both the ID (identifier) of the PDU session and the newly allocated IP address of the PDU session are sent to the UE. After receiving them, the UE uses the new IP address to send user data along the user plane path from the T-RAN to the T-PSA.

1112. Registration Complete.

The UE sends the Registration Complete message to the T-AMF.

1113. Uplink/Downlink User Data.

After steps 1101 to 1112 above are completed, the transmission of Uplink User Data and Downlink User Data from the UE to the T-RAN, then to the T-UPF, and further to the T-PSA can be realized.

1114. PDU Session Update SM Context Request.

The T-AMF sends the PDU Session Update SM Context Request to the T-SMF.

1115. PDU Session Update SM Context Request.

The T-SMF sends the PDU Session Update SM Context Request to the S-SMF.

1116. N4 Session Release Request.

The S-SMF sends the N4 Session Release Request to the S-PSA, to enable the S-PSA to release the PDU session of the UE.

1117. N4 Session Release Response.

The S-PSA sends the N4 Session Release Response to the S-SMF.

1118. PDU Session Update SM Context Response.

The S-SMF sends the PDU Session Update SM Context Response to the T-SMF in response to step 1115.

1119. PDU Session Update SM Context Response.

The T-SMF sends the PDU Session Update SM Context Response to the T-AMF in response to step 1114.

In steps 1114 to 1119, after receiving the Registration Complete message from the UE, the T-AMF sends a message to the T-SMF to instruct the T-SMF to send a message to the S-SMF, so as to enable the S-SMF to release the path from the S-UPF to the S-PSA.

1120. Registration Procedure.

The Registration Procedure includes steps 427 to 430 in FIG. 4.

The release of the indirect forwarding tunnel is the same as that shown in FIG. 9 and FIG. 10.

Afterwards, the uplink and downlink data of the UE are all forwarded based on the user plane path of T-RAN-T-UPF-T-PSA, enabling serving the UE by a single distributed node.

In this embodiment, the T-SMF selects the UPF based on the context information of the PDU session. The T-SMF sends N4 messages to the UPF to establish the user plane path from the T-RAN to the T-PSA. In addition, the tunnel information of the T-UPF is sent to the T-RAN along with the Registration Accept message. Also, the ID (identifier) of the PDU session and the newly allocated target IP address of the PDU session are sent to the UE together. After receiving them, the UE uses the new target IP address to send user data along the user plane path from the T-RAN to the T-PSA. After receiving the Registration Complete message from the UE, the T-AMF sends a message to the T-SMF to instruct the T-SMF to send a message to the S-SMF, so as to enable the S-SMF to release the S-PSA and the path from the S-UPF to the S-PSA.

Through this embodiment, serving the UE by a single distributed node can be achieved by adding a small number of technical features on the basis of the prior art.

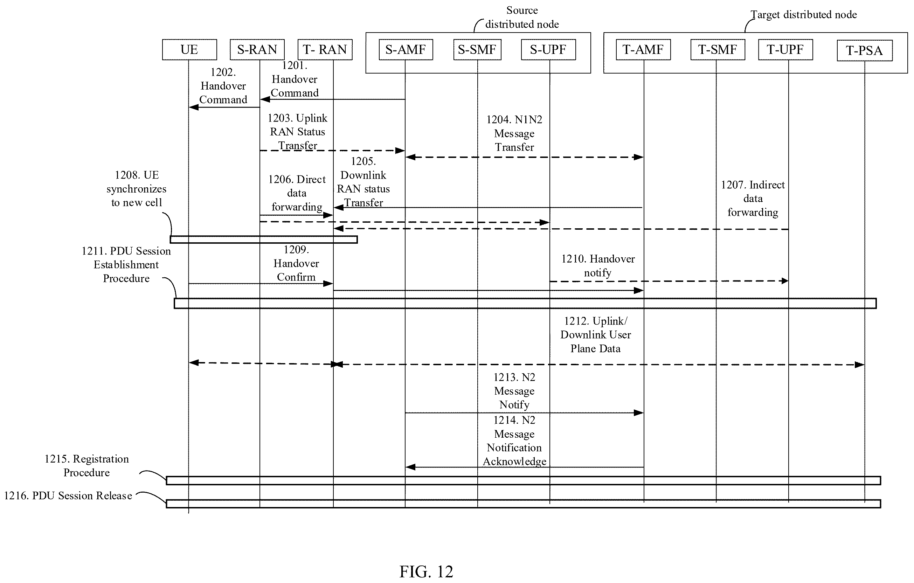

In Embodiment 3, after the preparation phase shown in FIG. 2 is completed, with reference to FIG. 12, in steps 1201 and 1202, the S-AMF in the source distributed node sends the Handover Command message to the UE through the S-RAN, where the Handover Command message includes: an ID of a target PDU session and an indication identifier. After receiving the indication identifier, the UE triggers a PDU session establishment procedure (step 1211 in FIG. 12).

In FIG. 12, after receiving the Handover Command message, the UE initiates the PDU session establishment procedure to the target distributed node. After a timer (if any) expires, the S-SMF triggers a PDU Session Release procedure across distributed nodes (step 1216 in FIG. 12). The PDU Session Establishment Request message sent by the terminal may be carried in the Handover Confirm message (step 1209 in FIG. 12). Referring to the execution phase in FIG.12, steps as follows are specifically included.
1201. Handover Command.
1202. Handover Command.

The Handover Command message includes: the ID of the target PDU session and the indication identifier. After receiving the indication identifier, the terminal triggers the PDU Session Establishment Procedure.
1203. Uplink RAN Status Transfer.
1204. N1N2 Message Transfer.
1205. Downlink RAN status Transfer.
1206. Direct data forwarding.
1207. Indirect data forwarding.
1208. UE synchronizes to new cell.
1209. Handover Confirm.

The Handover Confirm may carry a PDU Session Establishment Request, meaning that the UE actively initiates a PDU Session Establishment Procedure to the target distributed node.

Specifically, after receiving the Handover Command message, the UE triggers a new PDU Session Establishment Procedure. The indication identifier may be added to the Handover Command message to indicate to the UE to trigger the PDU Session Establishment Procedure, or the UE may make a judgment based on its own processing logic.

1210. Handover notify.

For steps 1201 to 1210, reference is made to steps 191 to 1011 in FIG. 10 accordingly.

1211. PDU Session Establishment Procedure.

After the execution of steps 1201 to 1310 is completed, the PDU Session Establishment Procedure is executed.
1212. Uplink/Downlink User Plane Data.
1213. N2 Message Notify.
1214. N2 Message Notification Acknowledge.
1215. Registration Procedure.

For the registration procedure, reference is made to FIG. 4.

1216. PDU Session Release.

If there is a timer, after the timer expires, the S-SMF triggers the PDU Session Release Procedure, and the PDU Session Release Procedure is the same as that in the prior art and will not be repeated here.

In this embodiment, after receiving the Handover Command message, the UE initiates the PDU Session Establishment Procedure to the target distributed node. The S-SMF triggers the PDU Session Release across distributed nodes to release the PDU session served by the source distributed node, thereby achieving the technical effect of serving the terminal by a single distributed node after handover.

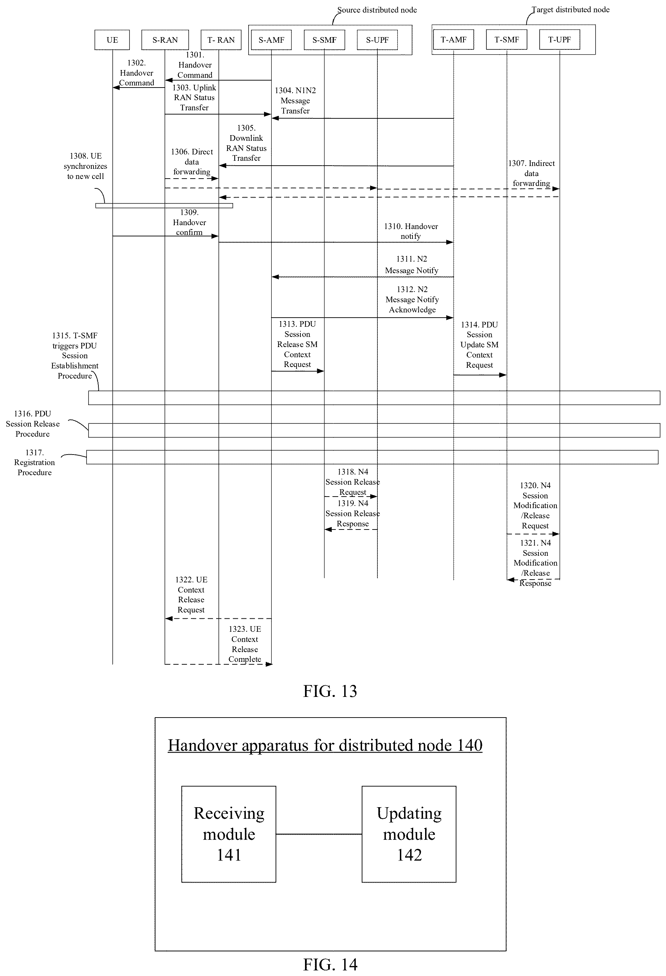

In Embodiment 4, further, referring to FIG. 13, after receiving the Update SM Context, the T-SMF triggers the PDU Session Establishment Procedure, which specifically includes steps as follows.
1301. Handover Command.
1302. Handover Command.
1303. Uplink RAN Status Transfer.
1304. N1N2 Message Transfer.
1305. Downlink RAN Status Transfer.
1306. Direct data forwarding.
1307. Indirect data forwarding.
1308. UE synchronizes to new cell.
1309. Handover confirm.
1310. Handover notify.
1311. N2 Message Notify.
1312. N2 Message Notify Acknowledge.
1313. PDU Session Release SM Context Request.
1314. PDU Session Update SM Context Request.

For steps 1401 to 1414, reference is made to steps 1001 to 1015 in FIG. 10.

1315. T-SMF triggers PDU Session Establishment Procedure.

The PDU Session Establishment Procedure includes: establishing a PDU session in the target distributed node and sending a timer value to the terminal, where the timer value is used to indicate to the terminal to initiate a target PDU Session Release Procedure when the timer expires, and the target PDU Session Release Procedure includes: releasing at least one target PDU session served by the source distributed node.

1316. PDU Session Release Procedure.

The PDU Session Release Procedure is the same as that in the prior art and will not be repeated here.
1317. Registration Procedure.
1318. N4 Session Release Request.
1319. N4 Session Release Response.
1320. N4 Session Modification/Release Request.
1321. N4 Session Modification/Release Response.
1322. UE Context Release Request.
1323. UE Context Release Complete.

In this embodiment, the SMF triggers the PDU Session Establishment Procedure to re-establish a session for the UE, and also sends a value of a timer to the UE, where the value of the timer is greater than or equal to a timer value set for the indirect forwarding tunnel. When the timer expires, the UE initiates the Session Release Procedure to release PDU session(s) served by the source distributed node. During the session release, resources of the indirect forwarding tunnel are released together. Alternatively, after a timer expires, the indirect forwarding tunnel is released, and after a PDU session release timer expires, resources of the PDU session are released.

Based on the multiple embodiments mentioned above, the present disclosure provides a handover method for a distributed node, which is applied to a terminal. The handover method for the distributed node includes: receiving a message carrying an ID of a target PDU session and a target IP address of the target PDU session; updating an IP address of the target PDU session using the target IP address, where the target PDU session is a PDU session that is affected during a handover procedure of a node serving the terminal.

The message may be a handover command message sent by a source distributed node or a registration acceptation message sent by a target distributed node. Specifically, one way is as in Embodiment 1. After the execution of the preparation stage of FIG. 9 is completed, the terminal receives the handover command message that is sent by the source distributed node via the S-RAN (step 1002 in FIG. 10). The handover command message carries the ID of the target PDU session and the target IP address of the target PDU session. Furthermore, the target PDU session is a PDU session that is affected during the handover procedure shown in FIG. 9 and FIG. 10. Another way is as in Embodiment 2. Before the execution of step 1111 is completed, the UE receives the registration acceptation message, which carries the ID of the target PDU session and the target IP address of the target PDU session. In this embodiment, the target PDU session is a PDU session that is affected during the handover procedure. Further, after updating the IP address of the target PDU session using the target IP address, afterwards, the UE can perform communication using the target IP address through the user plane path established between the UE and the target distributed node.

Further, the handover command message carries an indication identifier, and the indication identifier indicates to the terminal to trigger a PDU session establishment procedure.

For example, in Embodiment 3, the indication identifier may be carried in the handover command message (step 1202 in FIG. 12), and after receiving the handover command message, the UE triggers the PDU session establishment procedure according to the indication identifier.

Further, after a timer expires, the terminal initiates a release procedure of a target PDU session. Therein, the target PDU session is a PDU session served by the source distributed node; the timer is started according to a received timer value sent by the target distributed node; and the timer value is sent by the target distributed node to the terminal. The release procedure of the target PDU session refers to releasing the PDU session served by the source distributed node.

An example is as described in steps 1315 and 1316 in Embodiment 4. In step 1315, during the process of the T-SMF triggering the PDU session establishment procedure, the target distributed node sends a value of a timer to the terminal. After the timer expires, the UE initiates the target PDU session release procedure in the target step 1316.

An embodiment of the present disclosure further provides a handover method for a distributed node, which is applied to a source distributed node. The handover method for the distributed node includes: receiving a handover request from a source radio access network; instructing a target distributed node to hand over to independently serve a terminal.

With reference to FIG. 9, the S-RAN sends the handover request to the S-AMF of the source distributed node, and the source distributed node sends the create UE context request to the T-AMF of the target distributed node, thereby instructing the target distributed node to hand over to independently serve the terminal. The target distributed node handing over to independently serve the terminal includes the relevant steps in FIG. 9 and FIG. 10 that are performed by the target distributed node.

The instructing the target distributed node to hand over to independently serve the terminal includes: requesting the target distributed node to create a terminal context of the terminal; transmitting a context of a target PDU session to the target distributed node; and sending a handover command to the terminal. Specifically, the requesting the target distributed node to create the terminal context for the terminal is as shown in step 904 in FIG. 9. After receiving the request to create the terminal context of the terminal, the target distributed node creates the UE context for the UE. For the transmitting the context of the target PDU session to the target distributed node, with reference to FIG. 9, the context of the target PDU session is carried in the PDU session context response in step 908. After the execution of the steps in FIG. 9 is completed, the source distributed node sends the handover command to the terminal via the S-RAN (referring to step 1002 in FIG. 10).

Further, the handover method for the distributed node further includes: releasing a target PDU session served by the source distributed node. Specifically, referring to steps 1017 to 1026 in FIG. 10, step 1216 in FIG. 12, and step 1316 in FIG. 13, the source distributed node executes the relevant release procedure.

In addition, an embodiment of the present disclosure further provides a handover method for a distributed node, which is applied to a target distributed node. The handover method for the distributed node includes: selecting a network function serving a terminal; creating a terminal context for the terminal; and establishing a user plane path for a target PDU session of the terminal at the target distributed node. For these steps, reference is made to steps 904 to 922 in FIG. 9, steps 1102 to 1110 in FIG. 11, step 1211 in FIG. 12, and step 1315 in FIG. 13.

The selecting the network function serving the terminal includes: obtaining a context of the target PDU session from a source distributed node (referring to steps 907 and 908 in FIG. 9, the PDU session context response carries the context of the target PDU session); reselecting, based on the context of the target PDU session, a target anchor user plane function serving the terminal (e.g., step 909 in FIG. 9).

The reselecting, based on the context of the target PDU session, the target anchor user plane function (T-PSA) serving the terminal includes: if an IP address of the target PDU session is dynamically allocated, re-allocating, by the target distributed node, the IP address or an IP address prefix of the target PDU session, and sending the IP address or the IP address prefix to the terminal via the source distributed node, to indicate to the terminal to update the IP address or the IP address prefix of the target PDU session. In the embodiment of the present disclosure, during the process of reselecting the target anchor user plane function of the terminal, an IP address or an IP address prefix is reallocated for the target PDU session. For these steps, reference is made to step 909 in FIG. 9 and steps 1001 and 1002 in FIG. 10.

Further, the reselecting, based on the context of the target PDU session, the target anchor user plane function serving the terminal includes: if an IP address of the target PDU session is dynamically allocated, obtaining, through a target session management function, a target IP address or IP address prefix; if a static IP address or a static IP address prefix is subscribed by the terminal, remaining the IP address or the IP address prefix of the target PDU unchanged. For these steps, reference is made to step 909 in FIG. 9.

The selecting the network function serving the terminal includes: determining, through the target access and mobility management function, the target session management function based on the context of the terminal; obtaining, through the target session management function, a session context from the source session management function, and reselecting the target user plane function and the target anchor user plane function for an affected target PDU session; sending, through the target session management function based on a target IP address of the target PDU session, a packet forwarding rule and a data packet detection rule about the target IP address to the target user plane function and the target anchor user plane function, to establish a user plane path from a target radio access network to the target user plane function and then to the target anchor user plane function, where the target radio access network provides services to the terminal after movement, and the target IP address is a second IP address of the target PDU session. For these steps, reference is made to steps 910 to 913 in FIG. 9.

After obtaining, through the target session management function, the session context from the source session management function, and reselecting the target user plane function and the target anchor user plane function for the affected target PDU session, the handover method for the distributed node further includes: if an IP address of the target PDU session is dynamically allocated, obtaining, through the target session management function, a target IP address or a target IP address prefix; if a static IP address or a static IP address prefix is subscribed by the terminal, remaining an IP address or an IP address prefix of the target PDU unchanged. For these steps, reference is made to step 909 in FIG. 9.

In an embodiment of the present disclosure, the handover method for the distributed node further includes: if an indirect forwarding tunnel is used from a source radio access network to the target radio access network, instructing the source session management function to send tunnel information of the target user plane function to the source user plane function, to establish a forwarding tunnel for the target PDU session from the source user plane function to the target user plane function regarding a first IP address of the target PDU session. For this step, reference is made to steps 924 and 925 in FIG. 9.

In an embodiment of the present disclosure, the handover method for the distributed node further includes: if the indirect forwarding tunnel is used from the source radio access network to the target radio access network, sending, through the target session management function, a packet forwarding rule and a data packet detection rule related to the first IP address of the target PDU session to the target user plane function, to establish a forwarding tunnel from the target user plane function to the target radio access network regarding the first IP address of the target PDU session. For this step, reference is made to steps 919 and 920 in FIG. 9.

In an embodiment of the present disclosure, after sending, through the target session management function, the tunnel information of the target radio access network to the target user plane function, the handover method for the distributed node further includes: sending, through the target access and mobility management function, a target IP address of the target PDU session to the source access and mobility management function. For this step, reference is made to step 922 in FIG. 9.

The establishing the user plane path for the target PDU session of the terminal at the target distributed node includes: a handover command being sent to the terminal through the source access and mobility management function, where the handover command carries the target IP address of the target PDU session and the identifier of the target PDU session, so that the terminal updates the IP address of the target PDU session according to the target IP address, and the target radio access network receives a handover confirmation sent by the terminal and activates a user plane path from the terminal to the target radio access network and then to the target distributed node regarding the target IP address of the target PDU session. For this step, reference is made to steps 1002 to 1010 in FIG. 10.

In an embodiment of the present disclosure, after the target radio access network receives the handover confirmation sent by the terminal and activates the user plane path from the terminal to the target radio access network and then to the target distributed node regarding the target IP address of the target PDU session, the handover method for the distributed node further includes: sending, through the target access and mobility management function, a value of a timer started in the source access and mobility management function to the target session management function, to enable the target session management function to start the timer based on the value of the timer; where, when the timer expires, PDU session related resources of the source distributed node are released through the source session function, and resources of an indirect forwarding tunnel in the target UPF are released through the target session management function. For this step, reference is made to steps 1012 to 1024 in FIG. 10.

In an embodiment of the present disclosure, the handover command further carries an indication identifier, and the indication identifier is used to indicate to the terminal to initiate a PDU session establishment procedure; where the PDU session establishment procedure includes: establishing the target PDU session at the target distributed node. For this step, reference is made to steps 1201 and 1202 in FIG. 12.

The establishing the user plane path for the target PDU session of the terminal at the target distributed node further includes: receiving, through the target session management function, a handover success notification from the terminal, and triggering, through the target session management function, a target PDU session establishment procedure to the terminal; where the target PDU session establishment procedure includes: establishing a PDU session in the target distributed node and sending a timer value to the terminal, where the timer value is used to indicate that when a timer expires, the terminal initiates a target PDU session release procedure, which includes: releasing at least one target PDU session served by the source distributed node. For these steps, reference is made to 1309 and step 1316 in FIG. 13.

In an embodiment of the present disclosure, the selecting the network function serving the terminal includes: in a mobility registration update procedure, sending, to the terminal, the target IP address and an identifier of the target PDU session in a registration acceptation message. For this step, reference is made to Embodiment 2 (FIG. 11).

In an embodiment of the present disclosure, the establishing the user plane path for the target PDU session of the terminal at the target distributed node includes: sending, through the target session management function, a packet forwarding rule and a data packet detection rule related to the target IP address to the target anchor user plane function, to establish a user plane path from the terminal to the target radio access network, then to the target user plane function, and further to the target anchor user plane function. For this step, reference is made to steps 1106 and 1107 in FIG. 11.

In an embodiment of the present disclosure, the handover method for the distributed node further includes: sending, through the target access and mobility management function, tunnel information of the target user plane function to the target radio access network, and sending the ID and the target IP address of the target PDU session to the terminal, to enable the terminal to update the IP address of the target PDU session and use the new PDU session IP address to send user data along the user plane path from the target radio access network to the target anchor user plane function. For these steps, reference is made to step 1111 in FIG. 11.

In an embodiment of the present disclosure, the handover method for the distributed node further includes: sending, through the target radio mobility management function, an indication message to the target session management function after the target radio mobility management function receives a registration completion message from the terminal, to indicate to the target session management function to send an update session context message to the source session management function, to enable the source session management function to release session resources of the target PDU session from the source user plane function to the source anchor user plane function. For this step, reference is made to steps 1112 to 1119 in FIG. 11.

Finally, the establishing the user plane path for the target PDU session of the terminal at the target distributed node includes: establishing, under a preset condition, the user plane path for the target PDU session of the terminal at the target distributed node, where the preset condition is one of the following: a distributed node currently serving the terminal exceeds a source threshold, a data transmission delay of the terminal is greater than a target threshold, or subscription data of the terminal restricts the terminal to being served by only a single distributed node. It can be understood that when the preset condition is met, the method shown in FIG. 1 is adopted to use a plurality of distributed nodes to collaboratively serve the terminal.

In the embodiments of the present disclosure, the handover for a distributed node is achieved by reselecting the T-PSA for the PDU session or re-establishing the PDU session at the target distributed node during the handover procedure, ensuring that the UE is still served by a single distributed node (the target distributed node) after the handover, avoiding the transmission of signaling and user data across a plurality of distributed nodes, simplifying the interaction process, and reducing transmission delay and loss.

In addition, referring to FIG. 14, an embodiment of the present disclosure provides a handover apparatus 140 for a distributed node, which is applied to a terminal, and the handover apparatus for the distributed node includes:
a receiving module 141, configured to receive a message carrying an ID of a target PDU session and a target IP address of the target PDU session; and
an updating module 142, configured to update an IP address of the target PDU session using the target IP address, where the target PDU session is a PDU session that is affected during a handover procedure of a node serving the terminal.

In an optional embodiment, the message may be a handover command message sent by a source distributed node, or a registration acceptation message sent by a target distributed node.

In an optional embodiment, the handover command message carries an indication identifier, and the indication identifier indicates to the terminal to trigger a PDU session establishment procedure.

In an optional embodiment, the handover apparatus for the distributed node further includes an initiating module (not shown), which is configured to initiate, by the terminal after a timer expires, a release procedure of a target PDU session, where the target PDU session is a PDU session served by a source distributed node, the timer is started according to a received timer value sent by a target distributed node, and the timer value is sent by the target distributed node to the terminal.

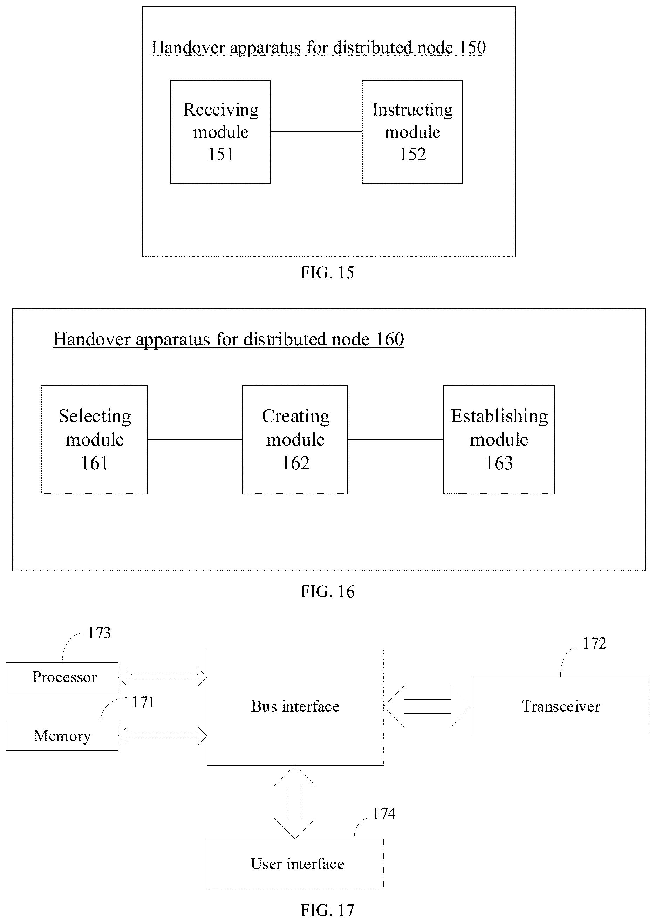

In addition, referring to FIG. 15, the present disclosure further provides a handover apparatus 150 for a distributed node, which is applied to a source distributed node, and the handover apparatus 150 for the distributed node includes:
a receiving module 151, configured to receive a handover request from a source radio access network; and
an instructing module 152, configured to instruct a target distributed node to hand over to independently serve a terminal.

In an optional embodiment, the instructing module 152 is specifically configured to: request the target distributed node to create a terminal context of the terminal; transmit a context of a target PDU session to the target distributed node; send a handover command to the terminal.

In an optional embodiment, the handover apparatus 150 for the distributed node further includes a releasing module (not shown), which is configured to release a target PDU session served by the source distributed node.

Referring to FIG. 16, the present disclosure also provides a handover apparatus 160 for a distributed node, which is applied to a target distributed node, and the handover apparatus 160 for the distributed node includes:
a selecting module 161, configured to select a network function serving a terminal;
a creating module 162, configured to create a terminal context for the terminal; and
an establishing module 163, configured to establish a user plane path for a target PDU session of the terminal at the target distributed node.

In an optional embodiment, the selecting module 161 is specifically configured to: obtain a context of the target PDU session from a source distributed node; reselect, based on the context of the target PDU session, a target anchor user plane function serving the terminal.

In an optional embodiment, when reselecting, based on the context of the target PDU session, the target anchor user plane function serving the terminal, the selecting module 161 is specifically configured to: if an IP address of the target PDU session is dynamically allocated, re-allocate, by the target distributed node, the IP address or an **IP** address prefix of the target PDU session, and send the IP address or the IP address prefix to the terminal via the source distributed node, to indicate to the terminal to update the IP address or the IP address prefix of the target PDU session.

In an optional embodiment, when reselecting, based on the context of the target PDU session, the target anchor user plane function serving the terminal, the selecting module 161 is specifically configured to: if an IP address of the target PDU session is dynamically allocated, obtain, through a target session management function, a target **IP** address or a target **IP** address prefix; if a static **IP** address or a static IP address prefix is subscribed by the terminal, remain an IP address or an **IP** address prefix of the target PDU unchanged.

In an optional embodiment, the selecting module 161 is specifically configured to: determine, through a target access and mobility management function, the target session management function based on the context of the terminal; obtain, through the target session management function, a session context from a source session management function, and reselect a target user plane function and the target anchor user plane function for an affected target PDU session; send, through the target session management function based on a target IP address of the target PDU session, a packet forwarding rule and a data packet detection rule related to the target IP address to the target user plane function and the target anchor user plane function, to establish a user plane path from a target radio access network to the target user plane function and then to the target anchor user plane function, where the target radio access network provides services to the terminal after movement, and the target IP address is a second **IP** address of the target PDU session.

In an optional embodiment, the source distributed node further includes a source user plane function; and the establishing module 173 is specifically configured to: if an indirect forwarding tunnel is used from a source radio access network to the target radio access network, instruct the source session management function to send tunnel information of the target user plane function to the source user plane function, to establish a forwarding tunnel for the target PDU session from the source user plane function to the target user plane function regarding a first **IP** address of the target PDU session.

In an optional embodiment, the establishing module 163 is further specifically configured to: if the indirect forwarding tunnel is used from the source radio access network to the target radio access network, send, through the target session management function, a packet forwarding rule and a data packet detection rule related to the first IP address of the target PDU session to the target user plane function, to establish a forwarding tunnel from the target user plane function to the target radio access network regarding the first IP address of the target PDU session.

In an optional embodiment, the source distributed node further includes a source access and mobility management function; and after sending, through the target session management function, the tunnel information of the target radio access network to the target user plane function, the establishing module 173 is further specifically configured to: send, through the target access and mobility management function, a target IP address of the target PDU session to the source access and mobility management function, to enable the source access and mobility management function to send a handover command carrying the target IP address of the target PDU session and an identifier of the target PDU session to the terminal, so that the terminal updates the IP address of the target PDU session according to the target IP address, and the target radio access network receives a handover confirmation sent by the terminal and activates a user plane path from the terminal to the target radio access network and then to the target distributed node regarding the target IP address of the target PDU session.

In an optional embodiment, the establishing module 163 is further specifically configured to: after the target radio access network receives the handover confirmation sent by the terminal and activates the user plane path from the terminal to the target radio access network and then to the target distributed node regarding the target IP address of the target PDU session, send, through the target access and mobility management function, a value of a timer started in the source access and mobility management function to the target session management function, to enable the target session management function to start the timer based on the value of the timer; where when the timer expires, the source session function releases a PDU session related resource of the source distributed node, and the target session management function releases a resource of an indirect forwarding tunnel in the target UPF.

In an optional embodiment, the handover command further carries an indication identifier, which is used to indicate to the terminal to initiate a PDU session establishment procedure, and the PDU session establishment procedure includes establishing the target PDU session at the target distributed node.

In an optional embodiment, the establishing module 163 is further specifically configured to: receive, through the target session management function, a handover success notification from the terminal, and trigger, through the target session management function, a target PDU session establishment procedure to the terminal, where the target PDU session establishment procedure includes: establishing a PDU session in the target distributed node and sending a timer value to the terminal, where the timer value is used to indicate that when a timer expires, the terminal initiates a target PDU session release procedure, and the target PDU session release procedure includes: releasing at least one target PDU session served by the source distributed node.

In an optional embodiment, the source distributed node includes the source session management function; where the source distributed node provides, via the source radio access network, services to the terminal before movement; and the target distributed node includes: the target session management function, the target user plane function, and the target anchor user plane function; the selecting module 161 is specifically configured to: in a mobility registration update procedure, send, to the terminal, the target IP address and an identifier of the target PDU session in a registration acceptation message.

In an optional embodiment, the establishing module 163 is specifically configured to: send, through the target session management function, a packet forwarding rule and a data packet detection rule related to the target IP address to the target anchor user plane function, to establish a user plane path from the terminal to the target radio access network, then to the target user plane function, and further to the target anchor user plane function.

In an optional embodiment, the target distributed node further includes the target access and mobility management function, and the establishing module 163 is further specifically configured to: send, through the target access and mobility management function, tunnel information of the target user plane function to the target radio access network, and send the ID and the target IP address of the target PDU session to the terminal, to enable the terminal to update an IP address of the target PDU session and use the new IP address of the PDU session to send user data along a user plane path from the target radio access network to the target anchor user plane function.

In an optional embodiment, the source distributed node further includes the source user plane function; and the establishing module 173 is further specifically configured to: send, through the target radio mobility management function, an indication message to the target session management function after the target radio mobility management function receives a registration completion message from the terminal, to indicate to the target session management function to send an update session context message to the source session management function, to enable the source session management function to release a session resource of the target PDU session from the source user plane function to a source anchor user plane function.

In an optional embodiment, the establishing module 163 is specifically configured to: establish, under a preset condition, the user plane path for the target PDU session of the terminal at the target distributed node, where the preset condition is one of the following: a distributed node currently serving the terminal exceeds a source threshold, a data transmission delay of the terminal is greater than a target threshold, or subscription data of the terminal restricts the terminal to being served by only a single distributed node.

Referring to FIG. 17, a terminal is provided, including a memory 171, a transceiver 172, and a processor 173:
the memory 171 being configured to store a computer program;
the transceiver 172 being configured to transmit and receive data under the control of the processor 173;
the processor 173 being configured to read the computer program in the memory 171 and perform the following operations:
   receiving a message carrying an ID of a target PDU session and a target IP address of the target PDU session;
   updating an IP address of the target PDU session using the target IP address, where the target PDU session is a PDU session that is affected during a handover procedure of a node serving the terminal.

In FIG. 17, a bus architecture may include any number of interconnected buses and bridges, specifically, various circuits of one or more processors represented by the processor 173 and the memory represented by the memory 171 are linked together. The bus architecture may also link together various other circuits such as peripherals, voltage regulators and power management circuits, which are well known in the art and therefore will not be further described herein. A bus interface provides an interface. The transceiver 172 may be a plurality of elements, i.e., including a transmitter and a receiver, providing units for communicating with various other apparatuses over transmission media including wireless channels, wired channels, fiber optic cables, etc. Optionally, the measurement processing apparatus may further include a user interface 174. For different user devices, the user interface 174 may also be an interface capable of connecting externally and internally to required devices, and the connected devices include but are not limited to a keypad, a display, a speaker, a microphone, a joystick, etc.

The processor 173 is responsible for managing the bus architecture and general processing, and the memory 171 may store data used by the processor 173 when performing operations.

Optionally, the processor 173 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD), and the processor 173 may also adopt a multi-core architecture.

The processor 173 is configured to execute any one of the methods that are related to the terminal and are provided by the embodiments of the present disclosure according to the obtained executable instructions by calling the computer program stored in the memory 171. The processor and the memory may also be physically separated.

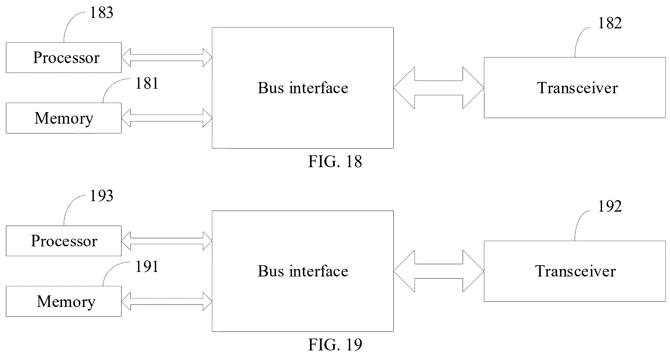

Referring to FIG. 18, a source distributed node is provided, including a memory 181, a transceiver 182, and a processor 183:
the memory 181 being configured to store a computer program;
the transceiver 182 being configured to transmit and receive data under the control of the processor 183;
the processor 183 being configured to read the computer program in the memory 181 and perform the following operations:
   receiving a handover request from a source radio access network;
   instructing a target distributed node to hand over to independently serve a terminal.

In FIG. 18, a bus architecture may include any number of interconnected buses and bridges, specifically, various circuits of one or more processors represented by the processor 183 and the memory represented by the memory 181 are linked together. The bus architecture may also link together various other circuits such as peripherals, voltage regulators and power management circuits, which are well known in the art and therefore will not be further described herein. A bus interface provides an interface. The transceiver 182 may be a plurality of elements, i.e., including a transmitter and a receiver, providing units for communicating with various other apparatuses over transmission media including wireless channels, wired channels, fiber optic cables, etc. The processor 183 is responsible for managing the bus architecture and general processing, and the memory 181 may store data used by the processor 183 when performing operations.

The processor 183 may be a CPU, an ASIC, an FPGA or a CPLD, and the processor may also adopt a multi-core architecture.

The processor 183 is configured to execute any one of the methods that are related to the radio access network and are provided by the embodiments of the present disclosure according to the obtained executable instructions by calling the computer program stored in the memory 181. The processor and the memory may also be physically separated.

Referring to FIG. 19, a target distributed node is provided, including a memory 191, a transceiver 192, and a processor 193:
the memory 191 being configured to store a computer program;
the transceiver 192 being configured to transmit and receive data under the control of the processor 193;
the processor 193 being configured to read the computer program in the memory 191 and perform the following operations:
   selecting a network function serving a terminal;
   creating a terminal context for the terminal;
   establishing a user plane path for a target PDU session of the terminal at the target distributed node.

In FIG. 19, a bus architecture may include any number of interconnected buses and bridges, specifically, various circuits of one or more processors represented by the processor 193 and the memory represented by the memory 191 are linked together. The bus architecture may also link together various other circuits such as peripherals, voltage regulators and power management circuits, which are well known in the art and therefore will not be further described herein. A bus interface provides an interface. The transceiver 192 may be a plurality of elements, i.e., including a transmitter and a receiver, providing units for communicating with various other apparatuses over transmission media including wireless channels, wired channels, fiber optic cables, etc. The processor 193 is responsible for managing the bus architecture and general processing, and the memory 191 may store data used by the processor 193 when performing operations.

The processor 193 may be a CPU, an ASIC, an FPGA or a CPLD, and the processor may also adopt a multi-core architecture.

The processor 193 is configured to execute any one of the methods that are related to the source core network element and are provided by the embodiments of the present disclosure according to the obtained executable instructions by calling the computer program stored in the memory 191. The processor and the memory may also be physically separated.

It should be noted here that the above apparatuses provided by the present disclosure are capable of implementing all the method steps implemented in the above method embodiments and are capable of achieving the same technical effects. The parts and beneficial effects of these embodiment which are same as those in the method embodiments will not be described in detail here.

It should be noted that the division of units in the embodiments of the present disclosure is illustrative and is merely a logical function division, and there may be other division manners in actual implementations. In addition, the functional units in the embodiments of the present disclosure may be integrated in a single processing unit, or each unit may be physically present separately, or two or more units may be integrated in a single unit. The above integrated units may be implemented either in the form of hardware or in the form of software functional units.

The integrated units may be stored in a processor-readable storage medium when implemented in the form of software function units and sold or used as an independent product. Based on such understanding, a technical solution of the present disclosure in essence, or the part of the technical solution which makes a contribution to the prior art, or all or part of the technical solution may be embodied in the form of a software product. The computer software product is stored in a storage medium, including several instructions for causing a computer device (which may be a personal computer, a server, or a network device, etc.) or a processor (processor) to execute all or part of the steps of the methods in the various embodiments of the present disclosure. The aforementioned storage media include various media that can store program codes, such as a U disk, a mobile hard disk, a read-only memory (Read-Only Memory, ROM), a random access memory (Random Access Memory, RAM), a magnetic disk or an optical disk.

An embodiment of the present disclosure provides a processor-readable storage medium, which stores a computer program therein, and the computer program is used to cause a processor to execute any one of the methods that are related to the terminal and are provided by the embodiments of the present disclosure. The processor is enabled to implement all the method steps implemented by the terminal in the above method embodiments and is capable of achieving the same technical effects. The parts and beneficial effects of this embodiment that are the same as those in the method embodiments will not be described in detail here.

The processor-readable storage medium may be any available medium or data storage device that can be accessed by a processor, including but not limited to a magnetic storage (such as a floppy disk, a hard disk, a magnetic tape, a magneto-optical disk (MO), etc.), an optical storage (such as a CD, a DVD, a BD, an HVD, etc.), and a semiconductor storage (such as a ROM, an EPROM, an EEPROM, a non-volatile memory (NAND FLASH), a solid state disk (SSD)), etc.

Those skilled in the art should understand that the embodiments of the present disclosure may be provided as methods, systems, or computer program products. Accordingly, the present disclosure may take the form of an entirely hardware embodiment, an entirely software embodiment or an embodiment combining software and hardware aspects. Also, the present disclosure may take the form of a computer program product embodied on one or more computerusable storage media (including but not limited to a disk storage and an optical storage, etc.) containing computerusable program codes therein.

The present disclosure is described with reference to flowcharts and/or block diagrams of methods, apparatuses, and computer program products according to the embodiments of the present disclosure. It should be understood that each procedure and/or block in the flowcharts and/or block diagrams, and combination(s) of procedures and/or blocks in the flowcharts and/or block diagrams may be implemented by the computer-executable instructions. These computer-executable instructions may be provided to a processor of a general-purpose computer, a special-purpose computer, an embedded processor, or other programmable data processing devices to produce a machine, such that an apparatus for implementing the functions specified in one or more procedures of the flowcharts and/or one or more blocks of the block diagrams may be produced via the instructions executed by the processor of the computer or other programmable data processing devices.

These processor-executable instructions may also be stored in a processor-readable memory capable of directing a computer or other programmable data processing devices to operate in a specific manner, so that the instructions stored in the processor-readable memory produce a manufacturing product including an instruction apparatus, where the instruction apparatus implements the functions specified in one or more procedures of the flowcharts and/or one or more blocks of the block diagrams.

These processor-executable instructions may also be loaded onto a computer or other programmable data processing devices, so that a series of operational steps are performed on the computer or other programmable devices to produce computer-implemented processing. Therefore, the instructions executed on the computer or other programmable devices provide steps for implementing the functions specified in one or more procedures of the flowcharts and/or one or more blocks of the block diagrams.

Obviously, those skilled in the art can make various modifications and variations to the present disclosure without departing from the spirit and scope of the present disclosure. As such, if these modifications and variations of the present disclosure fall within the scope of the claims of the present disclosure and their equivalents, the present disclosure also intends to include these modifications and variations.

## Claims

1. A handover method for a distributed node, **characterized by** being applied to a terminal, wherein the handover method for the distributed node comprises:
receiving a message carrying an ID of a target PDU session and a target IP address of the target PDU session;
updating an IP address of the target PDU session using the target IP address, wherein the target PDU session is a PDU session that is affected during a handover procedure of a node serving the terminal.

2. The handover method for the distributed node according to claim 1, wherein the message may be a handover command message sent by a source distributed node, or a registration acceptation message sent by a target distributed node.

3. The handover method for the distributed node according to claim 2, wherein the handover command message carries an indication identifier, and the indication identifier indicates to the terminal to trigger a PDU session establishment procedure.

4. The handover method for the distributed node according to claim 1, further comprising:
initiating, by the terminal after a timer expires, a release procedure of a target PDU session, wherein the target PDU session is a PDU session served by a source distributed node, the timer is started according to a received timer value sent by a target distributed node, and the timer value is sent by the target distributed node to the terminal.

5. A handover method for a distributed node, **characterized by** being applied to a source distributed node, wherein the handover method for the distributed node comprises:
receiving a handover request from a source radio access network;
instructing a target distributed node to hand over to independently serve a terminal.

6. The handover method for the distributed node according to claim 5, wherein the instructing the target distributed node to hand over to independently serve the terminal comprises:
requesting the target distributed node to create a terminal context of the terminal;
transmitting a context of a target PDU session to the target distributed node;
sending a handover command to the terminal.

7. The handover method for the distributed node according to claim 5, further comprising: releasing a target PDU session served by the source distributed node.

8. A handover method for a distributed node, **characterized by** being applied to a target distributed node, wherein the handover method for the distributed node comprises:
selecting a network function serving a terminal;
creating a terminal context for the terminal;
establishing a user plane path for a target PDU session of the terminal at the target distributed node.

9. The handover method for the distributed node according to claim 8, wherein the selecting the network function serving the terminal comprises:
obtaining a context of the target PDU session from a source distributed node;
reselecting, based on the context of the target PDU session, a target anchor user plane function serving the terminal.

10. The handover method for the distributed node according to claim 9, wherein the reselecting, based on the context of the target PDU session, the target anchor user plane function serving the terminal comprises:
if an IP address of the target PDU session is dynamically allocated, re-allocating, by the target distributed node, the IP address or an IP address prefix of the target PDU session, and sending the IP address or the IP address prefix to the terminal via the source distributed node, to indicate to the terminal to update the IP address or the IP address prefix of the target PDU session.

11. The handover method for the distributed node according to claim 9, wherein the source distributed node comprises a source session management function; the target distributed node comprises: a target access and mobility management function, a target session management function, a target user plane function, and a target anchor user plane function; and the selecting the network function serving the terminal comprises:
determining, through the target access and mobility management function, the target session management function based on the context of the terminal;
obtaining, through the target session management function, a session context from the source session management function, and reselecting the target user plane function and the target anchor user plane function for an affected target PDU session;
sending, through the target session management function based on a target **IP** address of the target PDU session, a packet forwarding rule and a data packet detection rule related to the target IP address to the target user plane function and the target anchor user plane function, to establish a user plane path from a target radio access network to the target user plane function and then to the target anchor user plane function, wherein the target radio access network provides services to the terminal after movement, and the target IP address is a second IP address of the target PDU session.

12. The handover method for the distributed node according to claim 9, wherein the reselecting, based on the context of the target PDU session, the target anchor user plane function serving the terminal comprises:
if an IP address of the target PDU session is dynamically allocated, obtaining, through a target session management function, a target IP address or a target IP address prefix;
if a static IP address or a static IP address prefix is subscribed by the terminal, remaining an IP address or an IP address prefix of the target PDU unchanged.

13. The handover method for the distributed node according to claim 10, wherein the source distributed node further comprises: a source user plane function; and the establishing the user plane path for the target PDU session of the terminal at the target distributed node comprises:
if an indirect forwarding tunnel is used from a source radio access network to the target radio access network, instructing the source session management function to send tunnel information of the target user plane function to the source user plane function, to establish a forwarding tunnel for the target PDU session from the source user plane function to the target user plane function regarding a first IP address of the target PDU session.

14. The handover method for a distributed node according to claim 13, wherein the establishing the user plane path for the target PDU session of the terminal at the target distributed node further comprises:
if the indirect forwarding tunnel is used from the source radio access network to the target radio access network, sending, through the target session management function, a packet forwarding rule and a data packet detection rule related to the first IP address of the target PDU session to the target user plane function, to establish a forwarding tunnel from the target user plane function to the target radio access network regarding the first IP address of the target PDU session.

15. The handover method for the distributed node according to claim 14, wherein the source distributed node further comprises a source access and mobility management function; and after sending, through the target session management function, tunnel information of the target radio access network to the target user plane function, the handover method for the distributed node further comprises:
sending, through the target access and mobility management function, a target IP address of the target PDU session to the source access and mobility management function, to enable the source access and mobility management function to send a handover command carrying the target IP address of the target PDU session and an identifier of the target PDU session to the terminal, so that the terminal updates the IP address of the target PDU session according to the target IP address, and the target radio access network receives a handover confirmation sent by the terminal and activates a user plane path from the terminal to the target radio access network and then to the target distributed node regarding the target IP address of the target PDU session.

16. The handover method for the distributed node according to claim 15, wherein after the target radio access network receives the handover confirmation sent by the terminal and activates the user plane path from the terminal to the target radio access network and then to the target distributed node regarding the target IP address of the target PDU session, the handover method for the distributed node further comprises:
sending, through the target access and mobility management function, a value of a timer started in the source access and mobility management function to the target session management function, to enable the target session management function to start a timer based on the value of the timer; wherein, when the timer expires, the source session function releases a PDU session related resource of the source distributed node, and the target session management function releases a resource of an indirect forwarding tunnel in the target UPF.

17. The handover method for the distributed node according to claim 8, wherein the handover command further carries an indication identifier, and the indication identifier is used to indicate to the terminal to initiate a PDU session establishment procedure, wherein the PDU session establishment procedure comprises: establishing the target PDU session at the target distributed node.

18. The handover method for the distributed node according to claim 8, wherein the establishing the user plane path for the target PDU session of the terminal at the target distributed node further comprises:
receiving, through the target session management function, a handover success notification from the terminal, and triggering, through the target session management function, a target PDU session establishment procedure to the terminal, wherein the target PDU session establishment procedure comprises: establishing a PDU session in the target distributed node and sending a timer value to the terminal, wherein the timer value is used to indicate that when a timer expires, the terminal initiates a target PDU session release procedure, and the target PDU session release procedure comprises: releasing at least one target PDU session served by a source distributed node.

19. The handover method for the distributed node according to claim 11, wherein the source distributed node comprises the source session management function; the source distributed node provides, via a source radio access network, services to the terminal before movement; the target distributed node comprises: the target session management function, the target user plane function, and the target anchor user plane function; and the selecting the network function serving the terminal comprises:
in a mobility registration update procedure, sending, to the terminal, the target IP address and an identifier of the target PDU session in a registration acceptation message.

20. The handover method for the distributed node according to claim 19, wherein the establishing the user plane path for the target PDU session of the terminal at the target distributed node comprises:
sending, through the target session management function, the packet forwarding rule and the data packet detection rule related to the target IP address to the target anchor user plane function, to establish a user plane path from the terminal to the target radio access network, then to the target user plane function, and further to the target anchor user plane function.

21. The handover method for the distributed node according to claim 20, wherein the target distributed node further comprises the target access and mobility management function, and the establishing the user plane path for the target PDU session of the terminal at the target distributed node further comprises:
sending, through the target access and mobility management function, tunnel information of the target user plane function to the target radio access network, and sending the ID and the target IP address of the target PDU session to the terminal, to enable the terminal to update an IP address of the target PDU session and use the new IP address of the PDU session to send user data along the user plane path from the target radio access network to the target anchor user plane function.

22. The handover method for the distributed node according to claim 20, wherein the source distributed node further comprises a source user plane function, and the establishing the user plane path for the target PDU session of the terminal at the target distributed node further comprises:
sending, through the target radio mobility management function, an indication message to the target session management function after the target radio mobility management function receives a registration completion message from the terminal, to indicate to the target session management function to send an update session context message to the source session management function, to enable the source session management function to release a session resource of the target PDU session from the source user plane function to a source anchor user plane function.

23. The handover method for the distributed node according to any one of claims 8 to 22, wherein the establishing the user plane path for the target PDU session of the terminal at the target distributed node comprises:
establishing, under a preset condition, the user plane path for the target PDU session of the terminal at the target distributed node, wherein the preset condition is one of the following: a distributed node currently serving the terminal exceeds a source threshold, a data transmission delay of the terminal is greater than a target threshold, or subscription data of the terminal restricts the terminal to being served by only a single distributed node.

24. A handover apparatus for a distributed node, **characterized by** being applied to a terminal, wherein the handover apparatus for the distributed node comprises:
a receiving module, configured to receive a message carrying an ID of a target PDU session and a target IP address of the target PDU session; and
an updating module, configured to update an IP address of the target PDU session using the target IP address, wherein the target PDU session is a PDU session that is affected during a handover procedure of a node serving the terminal.

25. The handover apparatus for the distributed node according to claim 24, wherein the message may be a handover command message sent by a source distributed node, or a registration acceptation message sent by a target distributed node.

26. The handover apparatus for the distributed node according to claim 25, wherein the handover command message carries an indication identifier, and the indication identifier indicates to the terminal to trigger a PDU session establishment procedure.

27. The handover apparatus for the distributed node according to claim 24, further comprising:
initiating, by the terminal after a timer expires, a release procedure of a target PDU session, wherein the target PDU session is a PDU session served by a source distributed node, the timer is started according to a received timer value sent by a target distributed node, and the timer value is sent by the target distributed node to the terminal.

28. A handover apparatus for a distributed node, **characterized by** being applied to a source distributed node, wherein the handover apparatus for the distributed node comprises:
a receiving module, configured to receive a handover request from a source radio access network;
an instructing module, configured to instruct a target distributed node to hand over to independently serve the terminal.

29. The handover apparatus for the distributed node according to claim 28, wherein the instructing module is specifically configured to:
request the target distributed node to create a terminal context of the terminal;
transmit a context of a target PDU session to the target distributed node;
send a handover command to the terminal.

30. The handover apparatus for the distributed node according to claim 28, further comprising: a releasing module, configured to release a target PDU session served by the source distributed node.

31. A handover apparatus for a distributed node, **characterized by** being applied to a target distributed node, wherein the handover apparatus for the distributed node comprises:
a selecting module, configured to select a network function serving a terminal;
a creating module, configured to create a terminal context for the terminal; and
an establishing module, configured to establish a user plane path for a target PDU session of the terminal at the target distributed node.

32. The handover apparatus for the distributed node according to claim 31, wherein the selecting module is specifically configured to:
obtain a context of the target PDU session from a source distributed node;
reselect, based on the context of the target PDU session, a target anchor user plane function serving the terminal.

33. The handover apparatus for the distributed node according to claim 32, wherein when reselecting, based on the context of the target PDU session, the target anchor user plane function serving the terminal, the selecting module is specifically configured to:
if an IP address of the target PDU session is dynamically allocated, re-allocate, by the target distributed node, the IP address or an IP address prefix of the target PDU session, and send the IP address or the IP address prefix to the terminal via the source distributed node, to indicate to the terminal to update the IP address or the IP address prefix of the target PDU session.

34. The handover apparatus for the distributed node according to claim 32, wherein the source distributed node comprises a source session management function; the target distributed node comprises: a target access and mobility management function, a target session management function, a target user plane function, and a target anchor user plane function; and wherein the selecting module is specifically configured to: determine, through the target access and mobility management function, the target session management function based on the context of the terminal;
obtain, through the target session management function, a session context from the source session management function, and reselect the target user plane function and the target anchor user plane function for an affected target PDU session;
send, through the target session management function based on a target IP address of the target PDU session, a packet forwarding rule and a data packet detection rule related to the target IP address to the target user plane function and the target anchor user plane function, to establish a user plane path from a target radio access network to the target user plane function and then to the target anchor user plane function, wherein the target radio access network provides services to the terminal after movement, and the target IP address is a second IP address of the target PDU session.

35. The handover apparatus for the distributed node according to claim 32, wherein when reselecting, based on the context of the target PDU session, the target anchor user plane function serving the terminal, the selecting module is specifically configured to:
if an IP address of the target PDU session is dynamically allocated, obtain, through a target session management function, a target IP address or a target IP address prefix;
if a static IP address or a static IP address prefix is subscribed by the terminal, remain an IP address or an IP address prefix of the target PDU unchanged.

36. The handover apparatus for the distributed node according to claim 33, wherein the source distributed node further comprises: a source user plane function; and wherein the establishing module is specifically configured to:
if an indirect forwarding tunnel is used from a source radio access network to the target radio access network, instruct the source session management function to send tunnel information of the target user plane function to the source user plane function, to establish a forwarding tunnel for the target PDU session from the source user plane function to the target user plane function regarding a first IP address of the target PDU session.

37. The handover apparatus for the distributed node according to claim 36, wherein the establishing module is specifically configured to:
if the indirect forwarding tunnel is used from the source radio access network to the target radio access network, send, through the target session management function, a packet forwarding rule and a data packet detection rule related to the first IP address of the target PDU session to the target user plane function, to establish a forwarding tunnel from the target user plane function to the target radio access network regarding the first IP address of the target PDU session.

38. The handover apparatus for the distributed node according to claim 37, wherein the source distributed node further comprises a source access and mobility management function; and wherein after sending, through the target session management function, tunnel information of the target radio access network to the target user plane function, the establishing module is further specifically configured to:
send, through the target access and mobility management function, a target **IP** address of the target PDU session to the source access and mobility management function, to enable the source access and mobility management function to send a handover command carrying the target **IP** address of the target PDU session and an identifier of the target PDU session to the terminal, so that the terminal updates the IP address of the target PDU session according to the target **IP** address, and the target radio access network receives a handover confirmation sent by the terminal and activates a user plane path from the terminal to the target radio access network and then to the target distributed node regarding the target **IP** address of the target PDU session.

39. The handover apparatus for the distributed node according to claim 38, wherein the establishing module is further specifically configured to: after the target radio access network receives the handover confirmation sent by the terminal and activates the user plane path from the terminal to the target radio access network and then to the target distributed node regarding the target IP address of the target PDU session, send, through the target access and mobility management function, a value of a timer started in the source access and mobility management function to the target session management function, to enable the target session management function to start a timer based on the value of the timer; wherein, when the timer expires, the source session function releases a PDU session related resource of the source distributed node, and the target session management function releases a resource of an indirect forwarding tunnel in the target UPF.

40. The handover apparatus for the distributed node according to claim 31, wherein the handover command further carries an indication identifier, and the indication identifier is used to indicate to the terminal to initiate a PDU session establishment procedure, wherein the PDU session establishment procedure comprises: establishing the target PDU session at the target distributed node.

41. The handover apparatus for the distributed node according to claim 31, wherein the establishing module is further specifically configured to: receive, through the target session management function, a handover success notification from the terminal, and trigger, through the target session management function, a target PDU session establishment procedure to the terminal, wherein the target PDU session establishment procedure comprises: establishing a PDU session in the target distributed node and sending a timer value to the terminal, wherein the timer value is used to indicate that when a timer expires, the terminal initiates a target PDU session release procedure, and the target PDU session release procedure comprises: releasing at least one target PDU session served by a source distributed node.

42. The handover apparatus for the distributed node according to claim 34, wherein the source distributed node comprises the source session management function; the source distributed node provides, via a source radio access network, services to the terminal before movement; the target distributed node comprises: the target session management function, the target user plane function, and the target anchor user plane function; and the selecting module is specifically configured to:
in a mobility registration update procedure, send, to the terminal, the target IP address and an identifier of the target PDU session in a registration acceptation message.

43. The handover apparatus for the distributed node according to claim 42, wherein the establishing module is specifically configured to:
send, through the target session management function, the packet forwarding rule and the data packet detection rule related to the target IP address to the target anchor user plane function, to establish a user plane path from the terminal to the target radio access network, then to the target user plane function, and further to the target anchor user plane function.

44. The handover apparatus for the distributed node according to claim 43, wherein the target distributed node further comprises the target access and mobility management function, and the establishing module is further specifically configured to:
send, through the target access and mobility management function, tunnel information of the target user plane function to the target radio access network, and send the ID and the target IP address of the target PDU session to the terminal, to enable the terminal to update an IP address of the target PDU session and use the new IP address of the PDU session to send user data along the user plane path from the target radio access network to the target anchor user plane function.

45. The handover apparatus for the distributed node according to claim 43, wherein the source distributed node further comprises a source user plane function; and wherein the establishing module is further specifically configured to: send, through the target radio mobility management function, an indication message to the target session management function after the target radio mobility management function receives a registration completion message from the terminal, to indicate to the target session management function to send an update session context message to the source session management function, to enable the source session management function to release a session resource of the target PDU session from the source user plane function to a source anchor user plane function.

46. The handover apparatus for the distributed node according to any one of claims 31 to 45, wherein the establishing module is specifically configured to:
establish, under a preset condition, the user plane path for the target PDU session of the terminal at the target distributed node, wherein the preset condition is one of the following: a distributed node currently serving the terminal exceeds a source threshold, a data transmission delay of the terminal is greater than a target threshold, or subscription data of the terminal restricts the terminal to being served by only a single distributed node.

47. A terminal, **characterized by** comprising a memory, a transceiver, and a processor; wherein
the memory is configured to store a computer program;
the transceiver is configured to transmit and receive data under control of the processor; and
the processor is configured to read the computer program in the memory and perform following operations:
receiving a message carrying an ID of a target PDU session and a target IP address of the target PDU session;
updating an IP address of the target PDU session using the target IP address, wherein the target PDU session is a PDU session that is affected during a handover procedure of a node serving the terminal.

48. A source distributed node, **characterized by** comprising a memory, a transceiver, and a processor; wherein the memory is configured to store a computer program;
the transceiver is configured to transmit and receive data under control of the processor; and
the processor is configured to read the computer program in the memory and perform following operations:
receiving a handover request from a source radio access network;
instructing a target distributed node to hand over to independently serve the terminal.

49. A target distributed node, **characterized by** comprising a memory, a transceiver, and a processor, wherein the memory is configured to store a computer program;
the transceiver is configured to transmit and receive data under control of the processor; and
the processor is configured to read the computer program in the memory and perform following operations:
selecting a network function serving a terminal;
creating a terminal context for the terminal;
establishing a user plane path for a target PDU session of the terminal at the target distributed node.

50. A processor-readable storage medium, **characterized in that** the processor-readable storage medium stores a computer program therein, and the computer program is used to cause the processor to execute the handover method for the distributed node according to any one of claims 1 to 23.
